(19) **Europäisches Patentamt**
**European Patent Office**
**Office européen des brevets**

(11) **EP 3 248 385 B1**

(12) **FASCICULE DE BREVET EUROPEEN**

(45) Date de publication et mention
de la délivrance du brevet:
**25.09.2019 Bulletin 2019/39**

(51) Int Cl.:
***H04Q 9/00*** *(2006.01)*

(21) Numéro de dépôt: **16702040.3**

(22) Date de dépôt: **18.01.2016**

(86) Numéro de dépôt international:
**PCT/EP2016/050909**

(87) Numéro de publication internationale:
**WO 2016/116407 (28.07.2016 Gazette 2016/30)**

(54) **SYSTÈME ÉVOLUTIF ET MÉTHODES POUR LA SURVEILLANCE ET LE CONTRÔLE D'UNE INSTALLATION SANITAIRE PAR DES DISPOSITIFS CONNECTÉS DISTRIBUÉS**

SKALIERBARES SYSTEM UND VERFAHREN ZUR ÜBERWACHUNG UND STEUERUNG EINER GESUNDHEITSEINRICHTUNG MIT VERWENDUNG VERTEILTER VERBUNDENER VORRICHTUNGEN

SCALABLE SYSTEM AND METHODS FOR MONITORING AND CONTROLLING A SANITARY FACILITY USING DISTRIBUTED CONNECTED DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **19.01.2015 FR 1500109**

(43) Date de publication de la demande:
**29.11.2017 Bulletin 2017/48**

(73) Titulaire: **Water Manager S. À R.L**
**8009 Strassen (LU)**

(72) Inventeur: **SOMAJINI, Claude**
**06800 Cagnes sur Mer (FR)**

(74) Mandataire: **Decobert, Jean-Pascal**
**Cabinet Hautier**
**Office Méditerranéen de Brevets d'Invention**
**20, rue de la Liberté**
**06000 Nice (FR)**

(56) Documents cités:
**EP-A1- 2 605 539      WO-A1-2012/170885**
**FR-A1- 3 007 925      US-A1- 2009 086 023**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Traditionnellement, les manoeuvres d'ouvertures ou de fermetures de l'eau se font par une action manuelle sur des robinets ou sur des vannes. Il n'est généralement pas possible d'isoler temporairement une partie de l'installation sanitaire à moins d'agir manuellement sur l'un de ces robinets ou l'une de ces vannes. Des systèmes existant permettent de contrôler une installation sanitaire mais chacun d'entre eux s'appui sur une unité centrale (connectée ou non) qui traite les informations provenant des capteurs et les instructions des utilisateurs et commande des actionneurs. Il n'y a pas d'interaction entre les différents capteurs et la centrale gère seule le fonctionnement de l'installation.

Pour ce qui est de la surveillance, il existe actuellement des coupe-circuits automatiques mais il faut les réarmer manuellement en cas de déclenchement. Il est aussi nécessaire d'agir directement sur ces dispositifs pour les désactiver et pour les réactiver. Un exemple de cet état de la technique est constitué par le document FR2870325. De plus, pour surveiller différents points d'un réseau d'alimentation en eau il faut multiplier le nombre de ces dispositifs, ces derniers ne communiquant pas entre eux. Il n'est ainsi pas possible pour l'un de ces dispositifs d'utiliser les informations provenant d'un autre de ces mêmes dispositifs pour détecter plus efficacement un disfonctionnement de l'installation sanitaire comme une fuite par exemple.

Un autre exemple de l'état de la technique est constitué par le document FR3007925. Ce système permet la surveillance et le contrôle d'une installation sanitaire mais utilise une centrale. Les capteurs-actionneurs ne communiquent pas entre eux mais transmettent les informations vers le dispositif principal de contrôle-commande qui gère seul l'ensemble des capteurs-actionneurs. De plus, l'unicité de type des capteurs-actionneurs ne permet que de contrôler et de surveiller partiellement l'installation sanitaire.

Le but du système selon l'invention est de contrôler et de surveiller l'ensemble d'une installation sanitaire en utilisant divers dispositifs connectés spécialisés distribués sur l'installation sanitaire et communiquant entre eux. Chacun de ces dispositifs connectés réalise sa ou ses fonctions en utilisant les informations communiquées par les autres dispositifs connectés. Chacun de ces dispositifs connectés réalise sa ou certaines de ses fonctions de manière autonome en cas de rupture de la communication avec les autres dispositifs connectés. Le ou les utilisateurs peuvent, depuis les appareils mobiles ou fixes tels que Smartphone, tablette tactile, ordinateur, serveur etc. connectés sur internet, interagir avec les dispositifs connectés, être averti en temps réel des disfonctionnements et recevoir des informations sur l'état de l'installation sanitaire.

Dans la suite de ce document on utilise le terme « réseau système » pour désigner le réseau permettant d'interconnecter les dispositifs connectés entre eux et d'assurer leurs connexions au réseau internet. Ce réseau peut être physiquement divisé en plusieurs sous-réseaux sans fil (par exemple Zigbee, WIFI, 6LoWPAN etc.) et/ou filaires (par exemple Ethernet, HomePlug etc.) et/ou mobile (par exemple GPRS, UMTS, LTE etc.). Dans ce cas, des dispositifs connectés assurent la fonction de passerelle pour passer d'un protocole à l'autre.

Dans la suite de ce document on utilise le terme « logiciel applicatif » pour désigner une application pour Smartphone, tablette tactile ou tout autre appareil mobile ou pour désigner un logiciel informatique nécessaire pour dialoguer avec le système selon l'invention.

Dans la suite de ce document on utilise le terme « terminal distant » pour désigner un appareil mobile ou fixe connecté à internet tels que Smartphone, tablette tactile, ordinateur, serveur etc. sur lequel est installé un logiciel applicatif utilisé par l'utilisateur pour interagir avec le système selon l'invention.

Dans la suite de ce document on utilise le terme « commande de l'utilisateur » pour désigner une action d'un utilisateur sur un terminal distant destinée à agir sur l'installation sanitaire au travers du système selon l'invention. Une commande de l'utilisateur est transmise par internet puis par le réseau système jusqu'au dispositif connecté permettant de réaliser l'action.

Dans la suite de ce document on utilise le terme « instruction de l'utilisateur » pour désigner une action d'un utilisateur sur un terminal distant destiné à agir sur le système selon l'invention afin de changer des paramètres ou de faire exécuter des programmes comme par exemple remplir une baignoire, faire l'appoint d'une piscine, arroser le jardin etc. Une instruction de l'utilisateur est transmise par internet puis par le réseau système jusqu'au dispositif connecté permettant de réaliser l'action.

Dans la suite de ce document on utilise le terme « vanne électrique » pour désigner un dispositif permettant de commander ou de modifier le débit de l'eau dans une canalisation en utilisant un signal électrique comme par exemple une électrovanne ou une vanne motorisée.

La surveillance consiste, à l'aide de dispositifs connectés intégrant des capteurs, de détecter les anomalies comme par exemple les fuites d'eau, les consommations anormales des appareils reliés à l'installation sanitaire ou les coupures d'alimentation. Une fois qu'une anomalie est détectée par l'un des dispositifs connectés, ce dernier envoi une alerte. Suivant la gravité de l'anomalie, ou bien si l'utilisateur ne réagit pas aux alertes, chacun des dispositifs connectés composant le système peut intervenir par exemple en coupant l'eau sur une partie de l'installation sanitaire ou en stoppant l'appareil en défaut. Les informations recueillies par les dispositifs connectés peuvent enfin être traitées et transmises vers les terminaux distants afin de visualiser l'état de l'installation et/ou d'en extraire par exemple des graphiques de consommations, des statistiques etc.

Le contrôle consiste à transmettre les commandes et instructions de l'utilisateur reçues par internet jusqu'aux dispositifs connectés permettant de réaliser les actions qui se chargent, si nécessaire, de faire réaliser physiquement les actions au moyen d'actionneurs comme par exemple des vannes électriques. Les capteurs intégrés aux dispositifs connectés font aussi partis du processus de contrôle en permettant de vérifier que les actions ont bien été réalisées et, pour certaines instructions utilisateur, d'effectuer les mesures nécessaire pour exécuter le programme défini.

Le système selon l'invention est constitué d'un ou de plusieurs dispositifs connectés spécialisés distribués sur l'installation sanitaire. Chacun des dispositifs connectés constituant le système selon l'invention comprend les moyens matériels et logiciels pour :

- communiquer avec les terminaux distants connectés sur internet au travers du réseau système;
- communiquer avec les autres dispositifs connectés au travers du réseau système;
- traiter en temps réel les commandes de l'utilisateur qui lui sont destinées et transmises au travers du réseau système si sa fonction l'exige et/ou le permet ;
- enregistrer et exécuter des instructions de l'utilisateur si sa fonction l'exige et/ou le permet;
- transmettre en temps réel des informations et/ou des alertes au travers du réseau système si sa fonction l'exige et/ou le permet;
- enregistrer et exécuter les instructions de l'utilisateur si sa fonction l'exige et/ou le permet.

L'invention sera mieux comprise à la lecture de la description qui va suivre, donnée uniquement à titre d'exemple et faite en se référant aux dessins annexés sur lesquels :

- Les figures 1A à 1D illustrent quelques exemples de modes de réalisation possible pour l'interface électronique intégrés dans tous les dispositifs connectés selon l'invention;
- Les figures 2A à 2C illustrent quelques exemples de modes de réalisations et d'intégration possible pour un dispositif connecté "capteur-actionneur" selon l'invention;
- Les figures 3A à 3D illustrent quelques exemples de modes de réalisations et d'intégrations possible pour un dispositif connecté "collecteur sanitaire" selon l'invention;
- Les figures 4A à 4F illustrent quelques exemples de modes de réalisations et d'intégrations possible pour un dispositif connecté "collecteur sanitaire modulaire" selon l'invention;
- Les figures 5A à 5D illustrent quelques exemples de modes de réalisations et d'intégrations possible pour un dispositif connecté "mitigeur" selon l'invention;
- Les figures 6A à 6C illustrent des exemples de modes de réalisations et d'intégrations possible pour un dispositif connecté "bonde d'évacuation" selon l'invention;

- La figure 7A illustre deux exemples de modes de réalisation et d'intégration possible pour un dispositif connecté "robinet flotteur" selon l'invention;
- Les figures 8A et 8B illustrent un exemple de mode de réalisation et d'utilisation possible pour un dispositif connecté "détecteur d'humidité" selon l'invention;
- La figure 9 illustre un exemple de réalisation du système de surveillance et de contrôle d'une installation sanitaire par dispositifs connectés;
- La figure 10 représente sous la forme d'un graphique un exemple de gabarit fixant les zones de fonctionnement pour les points d'eau ne possédant pas de dispositif connecté intégrant un capteur de débit;
- La figure 11 présente sous la forme d'un logigramme une méthode de configuration pour chaque capteur de débit des dispositifs connectés;
- La figure 12 présente sous la forme d'un logigramme une méthode de surveillance pour chaque capteur de débit des dispositifs connectés;
- La figure 13 présente sous la forme d'un logigramme une méthode d'alerte pour chaque capteur de débit des dispositifs connectés.

Tous les dispositifs connectés selon l'invention intègre une interface électronique assurant

- l'interface avec le réseau système;
- l'interface avec les capteurs et actionneurs nécessaires;
- le traitement des informations permettant de réaliser la ou les fonctions du dispositif connecté selon l'invention.

Cette interface électronique permet aussi d'assurer la fonction de passerelle pour passer d'un protocole à l'autre.

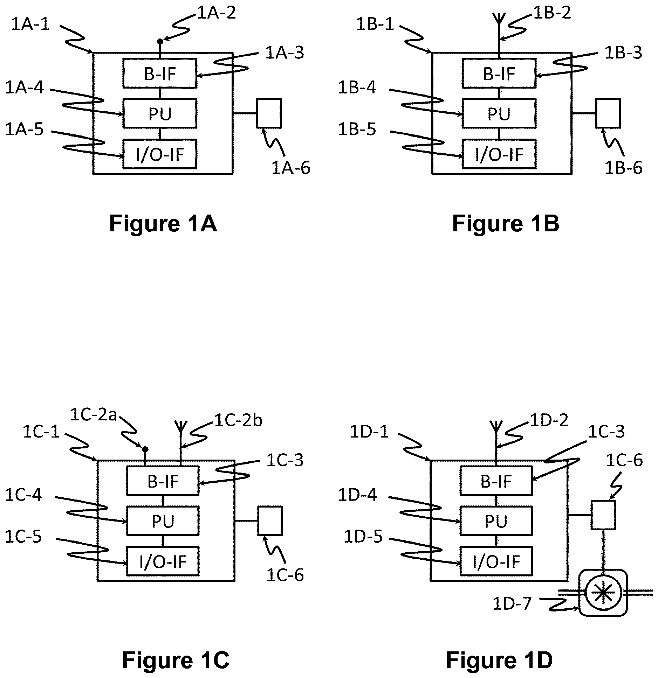

La figure 1A illustre un exemple de mode de réalisation possible pour l'interface électronique. Le câble électrique supportant le réseau système filaire se branche sur le connecteur (1A-2) pour connecter le dispositif au réseau système. Ce câble peut en outre assurer l'alimentation électrique du dispositif connecté. L'interface bus (1A-3) assure l'adaptation des signaux pour communiquer sur le bus. L'unité logique de traitement (1A-4) comprend les moyens matériels (microprocesseur, mémoires etc.) et logiciels pour réaliser la ou les fonctions du dispositif connecté. Si nécessaire, la commande des actionneurs et/ou la lecture des capteurs indispensables aux fonctionnements du dispositif connecté selon l'invention sont réalisés au travers de l'interface d'entrées/sorties (1A-5) permettant l'adaptation des signaux. L'alimentation électrique (de secours si le câble du réseau système assure l'alimentation principale) du dispositif connecté est fournie par le bloc d'alimentation (1A-6). Il peut s'agir d'une simple pile électrique, d'un accumulateur avec ou sans son chargeur, d'une alimentation secteur etc.

La figure 1B illustre un autre exemple de mode de réalisation possible pour l'interface électronique (1B-1). Cet exemple de réalisation reprend certains des éléments représentés sur la figure 1A à savoir l'unité logique de traitement (1B-4) et l'interface d'entrées/sorties (1B-5) et le bloc d'alimentation (1B-6). L'interface bus (1B-3) comprend des moyens d'émissions et de réceptions de signaux électromagnétiques pour communiquer sur le réseau système sans fil au travers de l'antenne (1B-2) intégrée ou non.

La figure 1C illustre un autre exemple de mode de réalisation possible pour l'interface électronique (1C-1). Cet exemple de réalisation reprend certains des éléments représentés sur la figure 1B à savoir l'unité logique de traitement (1C-4), l'interface d'entrées/sorties (1C-5) et le bloc d'alimentation (1C-6). L'interface bus (1C-3) permet de communiquer sur 2 sous réseaux système, l'un filaire et l'autre sans fil. Elle comprend des moyens d'émissions et de réceptions de signaux électromagnétiques pour communiquer sur le réseau système sans fil au travers de l'antenne (1C-2b) intégrée ou non. Le câble électrique supportant le réseau système filaire se branche sur le connecteur (1C-2a). Ainsi l'interface électronique permet d'assurer la fonction de passerelle pour passer d'un protocole à l'autre.

La figure 1D illustre un autre exemple de mode de réalisation possible pour l'interface électronique (1D-1) à tous les dispositifs connectés selon l'invention. Cet exemple de réalisation reprend certains des éléments représentés sur la figure 1B à savoir l'antenne (1D -2), l'interface bus (1D-3), l'unité logique de traitement (1D-4) et l'interface d'entrées/sorties (1D-5). L'alimentation électrique du dispositif connecté est fournie par un accumulateur (1D-6). Cet accumulateur est rechargé par une génératrice (1D-7) animée par le débit de l'eau circulant dans une canalisation de l'installation sanitaire, généralement la canalisation supportant le dispositif connecté. Ceci assure une autonomie totale du dispositif connecté.

Le dispositif connecté "capteur-actionneur" permet, en se raccordant sur une canalisation de l'installation sanitaire, de surveiller et de contrôler la distribution de l'eau sur cette canalisation.

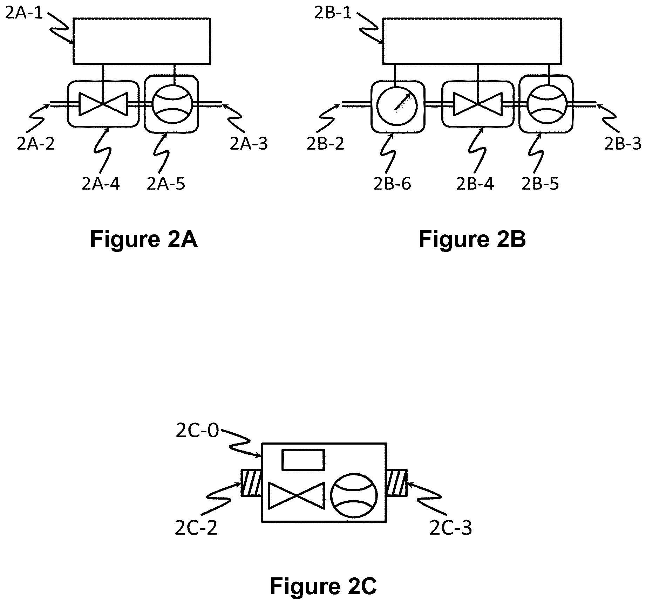

La figure 2A illustre un exemple de mode de réalisation possible pour un dispositif connecté "capteur-actionneur" selon l'invention. Il est raccordé par l'arrivée (2A-2) et le départ (2A-3). Ce dispositif s'installe donc comme une vanne classique. Il comprend une vanne électrique (2A-4) permettant d'ouvrir ou de fermer l'eau en aval du dispositif. C'est la partie actionneur du dispositif. Un capteur de débit (2A-5) fournit un signal électrique dont au moins une des caractéristiques varie en fonction du débit circulant dans la canalisation. C'est la partie capteur du dispositif. La vanne électrique et le capteur de débit sont connectés à l'interface électronique (2A-1).

La figure 2B illustre un autre exemple de mode de réalisation possible pour un dispositif connecté "capteur-actionneur" selon l'invention. Cet exemple de réalisation reprend les mêmes éléments que celui représenté en figure 2A pour l'interface électronique (2B-1), les raccordements sur la canalisation de l'installation sanitaire (2B-2 et 2B-3), pour la partie actionneur (2B-4) et pour le capteur de débit (2B-5). La partie capteur du dispositif est complétée par un capteur de pression (2B-6) fournissant un signal électrique dont au moins une des caractéristiques varie en fonction de la pression mesurée sur l'arrivée du dispositif "capteur-actionneur connecté".

La figure 2C illustre un exemple d'intégration possible pour un dispositif connecté "capteur-actionneur" selon l'invention. Le corps du dispositif (2C-0) renferme les capteurs, la vanne électrique et l'interface électronique. Le raccordement sur la canalisation de l'installation sanitaire se fait par les raccords (2C-2) pour l'arrivée et (2C-3) pour le départ.

Un collecteur sanitaire permet de distribuer l'eau depuis l'arrivée vers plusieurs canalisations connectées sur les départs du dispositif. Il permet de réaliser des réseaux dit "en pieuvre". Le dispositif connecté "collecteur sanitaire" permet, en plus de cette première fonction, de surveiller et de contrôler la distribution de l'eau sur les canalisations connectées sur ses départs. Le nombre de départ caractérise en partie le dispositif.

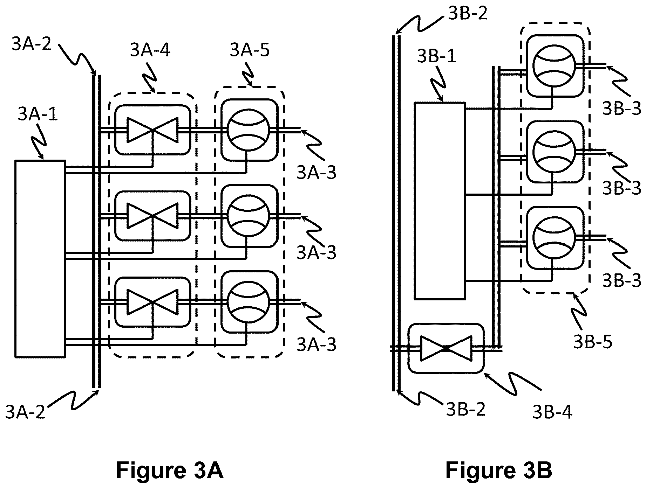

La figure 3A illustre un exemple de mode de réalisation possible pour un dispositif connecté "collecteur sanitaire multi-coupure" à 3 départs selon l'invention. Il est largement inspiré du dispositif connecté "capteur-actionneur". L'arrivée d'eau est raccordée sur l'une des arrivées (3A-2) situées à chaque extrémité du dispositif. Cela permet de placer plusieurs dispositifs connectés "collecteur sanitaire" en série. Les canalisations sont reliées sur les départs (3A-3). Ce dispositif s'installe en lieu et place d'un collecteur sanitaire classique. Il comprend des vannes électriques (3A-4) permettant d'ouvrir ou de fermer l'eau sur chaque départ du dispositif. Les capteurs de débits (3A-5) fournissent chacun un signal électrique dont au moins une des caractéristiques varie en fonction du débit circulant dans chacune des canalisations connectées sur les départs. Les vannes électriques et les capteurs de débits sont connectés à l'interface électronique (3A-1). Ce mode de réalisation permet donc de surveiller et de contrôler chaque canalisation indépendamment les unes des autres.

La figure 3B illustre un exemple de mode de réalisation possible pour un dispositif connecté "collecteur sanitaire mono-coupure" à 3 départs selon l'invention. Cet exemple de réalisation reprend les mêmes types d'éléments que celui représenté en figure 3A comme l'interface électronique (3B-1), les raccordements d'arrivées (3B-2) et les raccordements de départs (3B-3) pour le raccorder à l'installation sanitaire et les capteurs (3B-5) et la vanne électrique (3B-4). Mais il n'y a dans cet exemple qu'une seule vanne électrique qui permet de couper l'alimentation en eau de toutes les canalisations connectées sur les sorties. Ce mode de réalisation permet donc de surveiller chaque canalisation indépendamment les unes des autres mais ne permet de les contrôler que toutes ensembles.

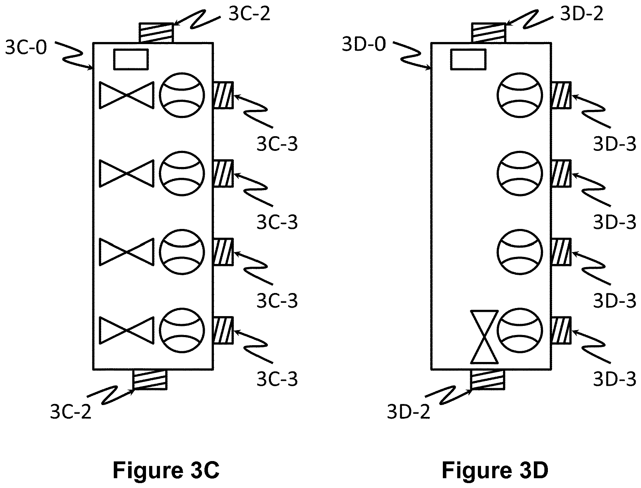

La figure 3C illustre un exemple d'intégration possible pour un dispositif connecté "collecteur sanitaire multi-coupure" à 4 départs. Le corps du dispositif (3C-0) renferme les capteurs de débits, les vannes électriques et l'interface électronique. Le raccordement sur la canalisation de l'installation sanitaire se fait par les raccords (3C-2) pour les arrivées et (3C-3) pour les départs.

La figure 3D illustre deux exemples d'intégration possible pour un dispositif connecté "collecteur sanitaire mono-coupure" à 4 départs. Le corps du dispositif (3D-0) renferme les capteurs de débits, la vanne électrique et l'interface électronique. Le raccordement sur la canalisation de l'installation sanitaire se fait par les raccords (3C-2) pour les arrivées et (3C-3) pour les départs.

Pour encore plus de flexibilité des installations sanitaire il est possible de rendre les collecteurs sanitaires modulaires. Il est ainsi possible de faire évoluer l'installation en ajoutant des modules permettant ainsi d'ajouter un départ au collecteur. C'est le but du dispositif connecté "collecteur sanitaire modulaire". Il se compose d'un module de base et de modules additionnels venant se placer les uns sur les autres.

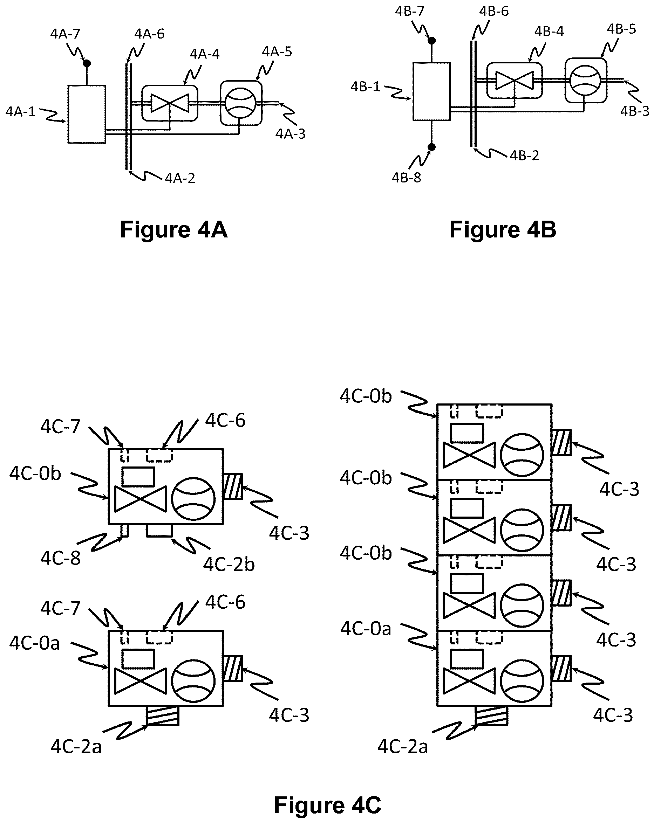

Les figures 4A à 4C illustrent un exemple de mode de réalisation et d'intégration possible pour un dispositif connecté "collecteur sanitaire modulaire multi-coupure" selon l'invention. Ce mode de réalisation permet de surveiller et de contrôler chaque canalisation indépendamment les unes des autres.

La figure 4A illustre un exemple de mode de réalisation possible pour le module de base. Il reprend les mêmes types d'éléments que celui représenté en figure 3A. La canalisation d'arrivée d'eau est raccordée sur l'arrivée (4A-2). La première canalisation est reliée sur le départ (4A-3). La vanne électrique (4A-4) permet d'ouvrir ou de fermer l'eau sur le départ du dispositif. Le capteur de débit (4A-5) fournit un signal électrique dont au moins une des caractéristiques varie en fonction du débit circulant dans la canalisation connectée sur le départ. La vanne électrique et le capteur de débit sont connectés à l'interface électronique (4A-1). L'interface électronique assure aussi, si nécessaire, la fonction de passerelle pour communiquer sur le sous-réseau système filaire. Ce dernier se connecte sur un connecteur (4A-7) pour connecter un module additionnel au réseau système. Le départ (4A-6) permet de raccorder l'arrivée de ce module additionnel.

La figure 4B illustre un exemple de mode de réalisation possible pour le module additionnel. Ce module additionnel est relié au module de base (ou à un autre module additionnel) par l'arrivée (4B-2) et par le connecteur électrique (4B-8). Le module additionnel est ainsi raccordé à l'arrivée d'eau et au réseau système. Ce module additionnel reprend certains éléments du module de base représenté en figure 4A comme le départ (4B-3), la vanne électrique (4B-4), le capteur de débit (4B-5), le départ vers un autre module additionnel (4B-6) et le connecteur du réseau système (4B-7). L'interface électronique (4B-1) communique uniquement au travers du réseau système filaire distribué par le module de base.

La figure 4C illustre deux exemples d'intégration possible pour le module de base (4C-0a) et les modules additionnels (4C-0b) ainsi que leur assemblage pour former un dispositif connecté "collecteur sanitaire modulaire multi-coupure" à 4 départs. Le raccordement sur les canalisations de l'installation sanitaire se fait par les raccords (4C-2a) pour l'arrivée et (4C-3) pour les départs. Les raccords (4C-6) et (4C-2b) et les connecteurs électrique (4C-7) et (4C-8) permettent de relier les modules entre eux.

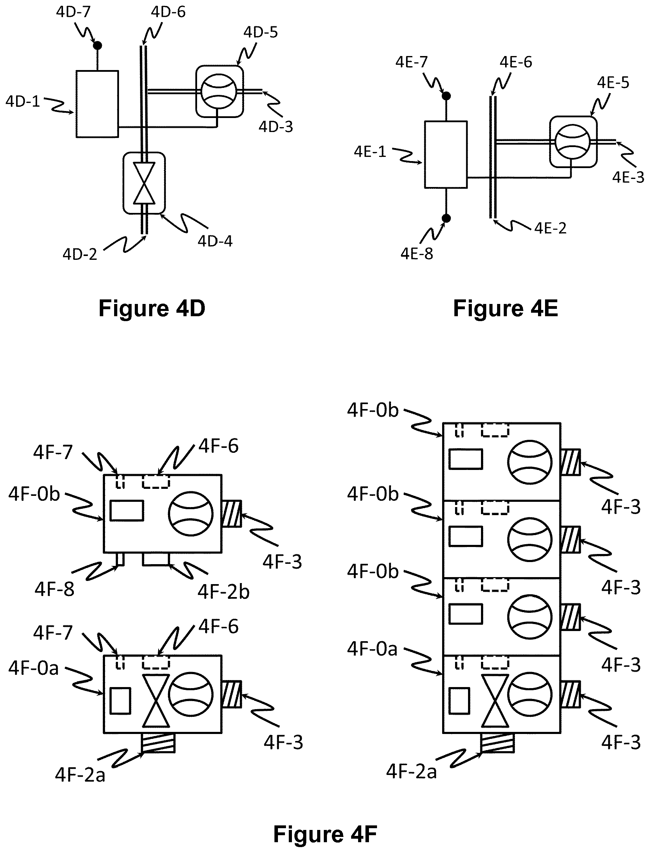

Les figures 4D à 4F illustrent un autre exemple de mode de réalisation et d'intégration possible pour un dispositif connecté "collecteur sanitaire modulaire mono-coupure" selon l'invention. Ce mode de réalisation permet de surveiller chaque canalisation indépendamment les unes des autres mais ne permet de les contrôler que toutes ensembles.

La figure 4D illustre un exemple de mode de réalisation possible pour le module de base. Ce module de base reprend les mêmes éléments que celui représenté en figure 4A. L'unique différence est le raccordement de la vanne électrique (4D-4). Celle-ci ferme directement l'arrivée d'eau et coupe l'eau sur le départ (4D-3) ainsi que sur le départ (4D-6). Ce mode de réalisation contrôle donc simultanément les départs de tous les modules additionnels en plus de celui du module de base.

La figure 4E illustre un exemple de mode de réalisation possible pour le module additionnel. Ce module additionnel reprend tous les éléments de celui représenté en figure 4C exception faite de la vanne électrique. En effet, comme le module de base contrôle simultanément tous les départs la vanne électrique n'est plus nécessaire.

La figure 4F illustre deux exemples d'intégration possible pour le module de base (4F-1) et les modules additionnels (4F-2) ainsi que leur assemblage pour former un dispositif connecté "collecteur sanitaire modulaire mono-coupure" à 4 départs. Le raccordement sur les canalisations de l'installation sanitaire se fait par les raccords (4F-2a) pour l'arrivée et (4F-3) pour les départs. Les raccords (4F-6) et (4F-2b) et les connecteurs électriques (4F-7) et (4F-8) permettent de relier les modules entre eux.

Il est important de pouvoir surveiller les robinets présents sur une installation sanitaire. En effet, ils sont souvent la source de fuites ou sont parfois simplement oubliés en position ouverte. Il est possible de résoudre ces problèmes en utilisant un dispositif connecté "capteur-actionneur" mais dans ce cas l'ensemble de la canalisation est coupée en cas d'anomalie. De plus, le système ne fera pas la différence entre une fuite et un oubli. Pour répondre à ce besoin le système propose un dispositif connecté "robinet simple" ou "robinet mélangeur" ou "robinet mitigeur". Les mitigeurs sont néanmoins beaucoup plus utilisés de nos jours que les mélangeurs. Les exemples donnés dans ce document sont réalisés autour d'un mitigeur mais sont transposables à un robinet classique ou à un robinet mélangeur en adaptant simplement le ou les mécanismes de manoeuvre.

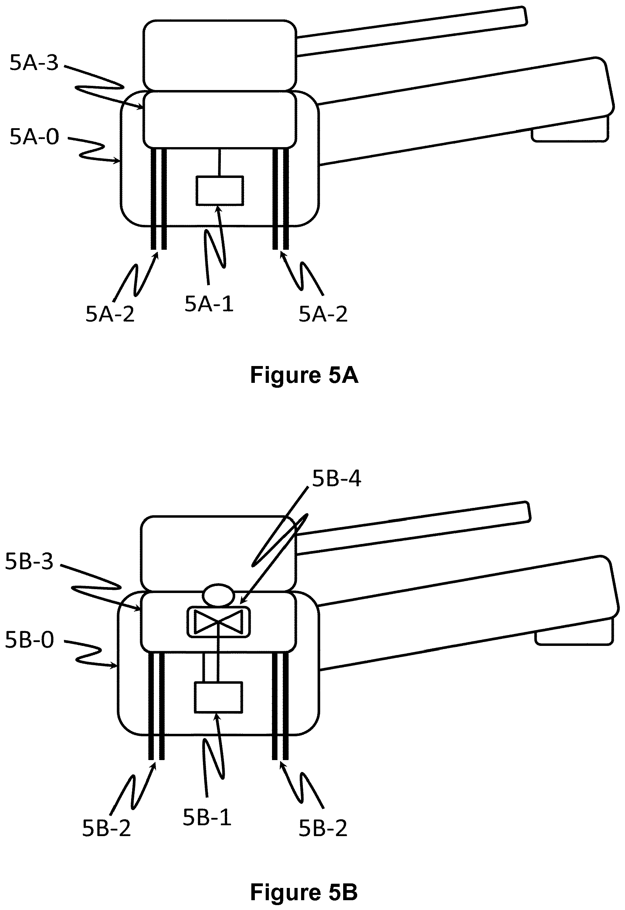

La figure 5A illustre un exemple de mode de réalisation possible pour le dispositif connecté "robinet mitigeur". Selon l'invention. Le corps (5A-0) intègre la cartouche (5A-3) réalisant la fonction mitigeur et comprenant un capteur solidaire du mécanisme permettant de savoir si le robinet est ouvert ou non. C'est pourquoi la cartouche est connectée à l'interface électronique (5A-1). Les arrivées d'eau (5A-2) alimentent directement la cartouche du mitigeur. Ce dispositif simple permet donc au système de savoir si le robinet est ouvert ou non. Il faut noter que ce dispositif "robinet connecté" peut être rajouté sur n'importe quel robinet en fixant le dispositif sur le mécanisme d'ouverture/fermeture.

La figure 5B illustre un autre exemple de mode de réalisation possible pour le dispositif connecté "robinet mitigeur" selon l'invention. Ce dispositif reprend les éléments de celui présenté en figure 5A. Il ajoute cependant une vanne électrique (5B-4) sur la cartouche à capteur (5B-3) et solidaire du mécanisme de manoeuvre manuel du robinet. Cette vanne électrique assure ainsi le contrôle du mitigeur.

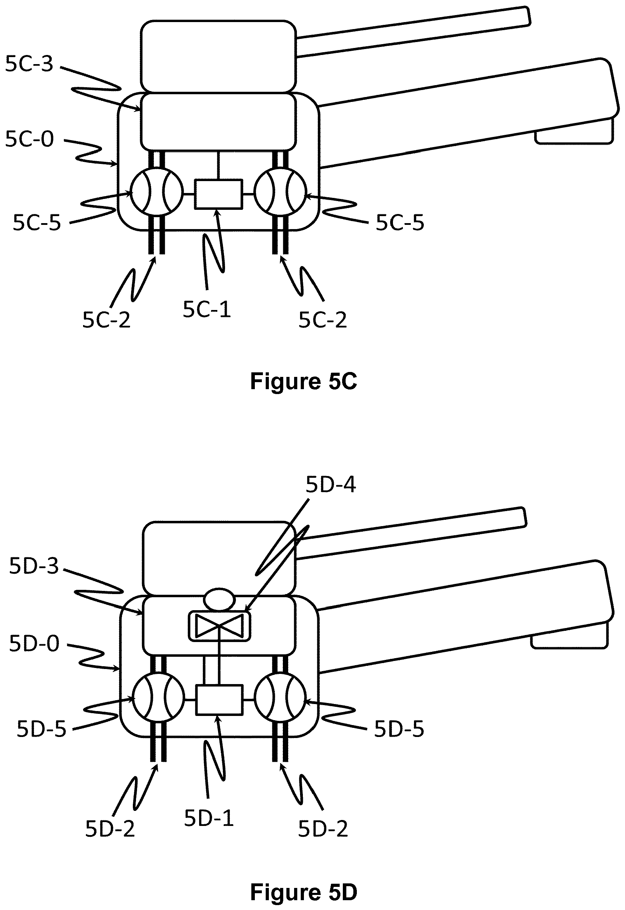

La figure 5C illustre un autre exemple de mode de réalisation possible pour le dispositif connecté "robinet mitigeur" selon l'invention. Ce dispositif reprend certains éléments de celui présenté en figure 5A comme le corps (5C-0), la cartouche à capteur (5C-3), l'interface électronique (5C-1) et les arrivées d'eau chaude et d'eau froide (5C-2). Deux débitmètres (5C-5), l'un pour l'eau chaude et l'autre pour l'eau froide, sont intercalés entre chaque arrivée et la cartouche. La surveillance est ainsi plus précise.

La figure 5D illustre un autre exemple de mode de réalisation possible pour le dispositif connecté "robinet mitigeur" selon l'invention. Ce dispositif reprend les éléments de celui présenté en figure 5C. Il ajoute cependant une vanne électrique (5D-4) sur la cartouche à capteur (5D-3) et solidaire du mécanisme de manoeuvre manuel du robinet. Cette vanne électrique assure ainsi le contrôle du mitigeur.

L'un des problèmes majeurs pour faire de la domotique sur une installation sanitaire est le contrôle et la surveillance des bondes d'évacuations. En effet, pour remplir une baignoire par exemple il faut au préalable fermer la bonde et s'assurer que cette action a bien été réalisée. En cas d'oubli d'un évier plein d'eau, il faut pouvoir ouvrir la bonde pour le vider. Le dispositif connecté "bonde d'évacuation" entend répondre à ce problème.

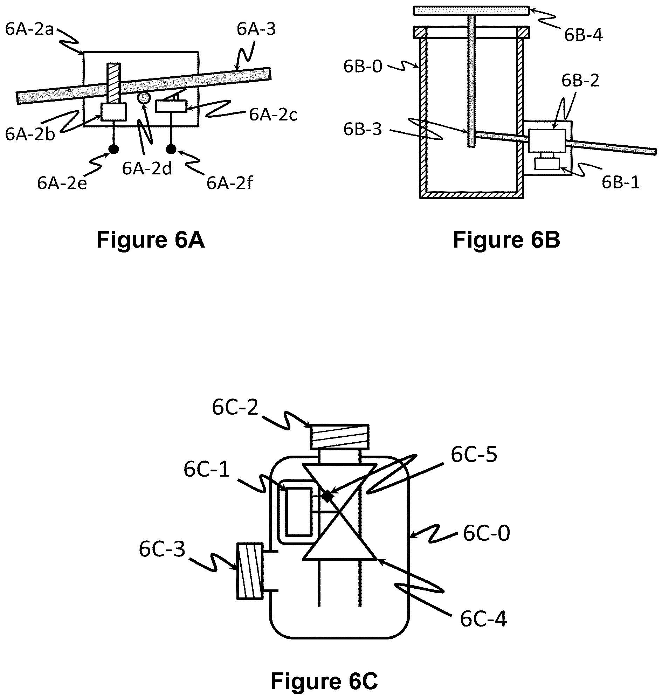

La figure 6A illustre un exemple de mode de réalisation possible pour le module détecteur-actionneur (6A-2a) du dispositif connecté "bonde d'évacuation" selon l'invention. La tige de manoeuvre de la bonde (6A-3) peut pivoter autour de l'axe (6A-2d). Les actions d'ouvertures et de fermetures sont assurées par le moteur à vis sans fin (6A-2b). Le détecteur (6A-2c) indique la position de la tige de manoeuvre. Les connecteurs (6A-2e et 6A-2f) permettent de connecter le détecteur et le moteur à l'interface électronique. Ce dispositif simple permet donc de manoeuvrer la bonde et de vérifier sa position.

La figure 6B illustre un exemple de mode de réalisation possible pour le dispositif connecté "bonde d'évacuation" selon l'invention. Le corps de la bonde (6B-0) est vu en coupe. Ceci permet de voir les tiges de manoeuvres (6B-3) de la bonde (6B-4). Le module détecteur-actionneur (6B-2) assure les fonctions de manoeuvres et de vérifications de la position de la bonde. Ce module est connecté à l'interface électronique (6B-1).

La figure 6C illustre un autre exemple de mode de réalisation et d'intégration possible pour le dispositif connecté "bonde d'évacuation" selon l'invention. Dans cet exemple, le dispositif "bonde connecté" est intégré dans le siphon d'évacuation (6C-0). Il est constitué d'une vanne électrique (6C-4) et de l'interface électronique (6C-1). La vanne électrique est équipée d'un capteur de position (6C-5) pour détecter que la vanne électrique est bien ouverte ou bien fermée. La vanne électrique et le capteur de position sont connectés à l'interface électronique. Les raccords (6C-2 et 6C-3) permettent de raccorder le siphon à l'équipement sanitaire et à l'évacuation. Cette intégration au siphon permet d'équiper simplement la plupart des éviers, lavabos, baignoire etc.

La chasse d'eau est un équipement gros consommateur d'eau dans les habitations. Les fabricants ont depuis longtemps développés des systèmes à double volumes permettant de réaliser des économies. Mais ces systèmes sont statiques dans le sens où il n'est pas possible de changer le réglage du niveau du réservoir simplement. Le dispositif connecté "robinet flotteur" permet de répondre à ce problème. Ce dispositif peut aussi être utilisé pour d'autres réservoirs d'eau comme les piscines etc.

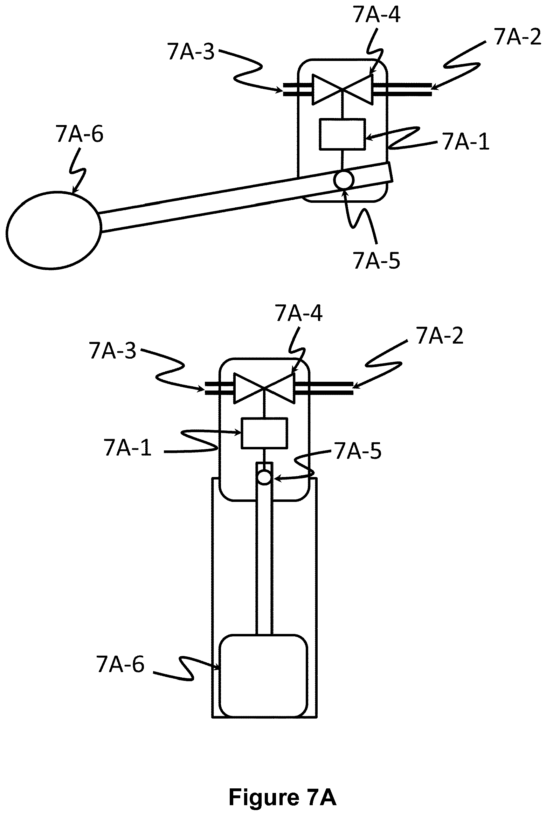

La figure 7A illustre deux exemples de mode de réalisations possible pour le dispositif connecté "robinet flotteur" selon l'invention. Le flotteur (7A-6) actionne le capteur de position (7A-5). Le niveau d'eau dans le réservoir est ainsi détecté et transmis à l'interface électronique (7A-1). La vanne électrique (7A-4) permet de contrôler l'eau depuis l'arrivée (7A-2) vers la sortie (7A-3). Le système peut ainsi remplir le réservoir lorsque le flotteur arrive en dessous d'un certain niveau. Le système peut aussi contrôler le niveau de remplissage du réservoir. L'utilisateur peut ainsi régler très simplement le niveau maximum de remplissage du réservoir. Par ailleurs, le système surveille aussi le remplissage en mesurant la position du flotteur.

Plus le nombre d'équipements sanitaires connectés au système est important, plus la surveillance et le contrôle de l'installation est précis. Il est donc utile de pouvoir équiper directement les équipements sanitaires domestiques comme les machines à laver, les réfrigérateurs, les machines à café etc. L'interface électronique peut être intégrée dans tous les équipements sanitaires lors de leur fabrication ou ajouter par la suite par un technicien pour former un dispositif connecté "équipement sanitaire". Une API simple et fonctionnelle permet la communication avec les autres dispositifs connectés. La configuration doit être aisée et faite depuis les terminaux distants. Le système peut donc communiquer directement avec les équipements ainsi connectés et donc les surveiller et les contrôler si nécessaire.

Il arrive souvent que des équipements fuient alors que tout parait normal en examinant l'arrivé d'eau. On peut citer l'exemple d'une fuite sur la pompe de vidange d'une machine à laver. Dans ce cas aucun des dispositifs décris jusqu'à présent ne propose de solution. Le dispositif connecté "détecteur d'humidité" entend répondre à ce besoin.

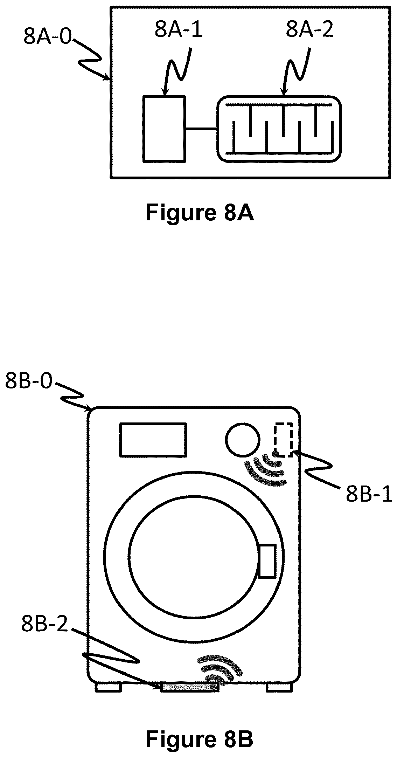

La figure 8A illustre un exemple de mode de réalisation possible pour le dispositif connecté "détecteur d'humidité" selon l'invention. Le corps du dispositif (8A-0) intègre un capteur d'humidité à électrodes (8A-1) connecté à l'interface électronique (8A-2). Ce dispositif simple permet par exemple de détecter de l'eau au sol.

La figure 8B illustre un exemple de mode d'utilisation possible pour les dispositifs connectés "équipement sanitaire" (8B-0) et "détecteur d'humidité" (8B-2) selon l'invention. Un lave-linge est équipé d'une interface électronique (8B-1) faisant de lui un dispositif connecté "équipement sanitaire" (8B-0) selon l'invention. Si le dispositif connecté "détecteur d'humidité" (8B-2) placé sous le lave-linge détecte de l'eau, il transmet une alerte capté par le lave-linge qui peut interrompre son programme et transmettre à son tour une alerte.

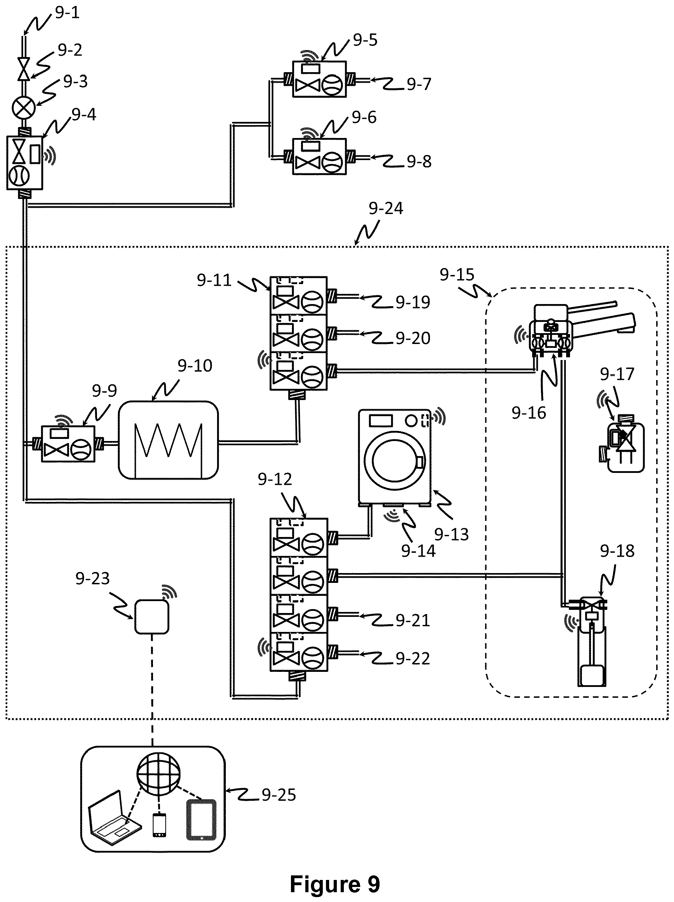

La figure 9 illustre un exemple de réalisation du système de surveillance et de contrôle d'une installation sanitaire par dispositifs connectés. Ce système comprend une série de dispositifs connectés chacun d'eux participant à la surveillance et au contrôle d'une partie spécifique de l'installation sanitaire. Le premier dispositif connecté "capteurs-actionneurs" (9-4) est installé en tête de réseau juste après l'arrivée d'eau (9-1), la vanne d'arrêt générale (9-2) et le compteur générale (9-3). Il surveille et contrôle donc l'ensemble de l'installation sanitaire. On trouve ensuite deux autres dispositifs connectés "capteurs-actionneurs" (9-5) et (9-6) placés juste avant les départs vers le jardin (9-7) et vers la piscine (9-8). Ces trois premiers dispositifs connectés sont situés hors de la maison (9-24). Le dispositif connecté "capteurs-actionneurs" (9-9) est placé juste avant l'appareil de production d'eau chaude (9-10). Il participe à la surveillance et au contrôle du sous-réseau d'eau chaude de l'installation sanitaire, appareil de production d'eau chaude compris. Le dispositif connecté "collecteur sanitaire modulaire multi-coupure" à 3 départs (9-11) surveille et contrôle chaque départ d'eau chaude vers la cuisine (9-19), vers la salle de bain (9-20) et vers les toilettes (9-15). Le dispositif connecté "collecteur sanitaire modulaire multi-coupure" à 4 départs (9-12) surveille et contrôle chaque départ d'eau froide vers la cuisine (9-21), vers le lave-linge (9-13), vers la salle de bain (9-22) et vers les toilettes (9-15). Dans les toilettes (9-15) il y a un lave-main équipé des dispositifs connectés "robinet mitigeur" (9-16) et "bonde d'évacuation" (9-17). Il y a aussi une chasse d'eau dont le réservoir est équipé d'un dispositif connecté "robinet flotteur" (9-18) assurant le contrôle et la surveillance du remplissage du réservoir. L'ensemble des dispositifs connectés sont reliés au réseau système par une liaison sans fil Zigbee. Le boitier ADSL (9-23) déjà présent dans la maison (9-24) et permettant la connexion au réseau Internet (9-25) est connecté à l'ensemble des dispositifs connectés par la liaison Zigbee dont il est pré-équipé.

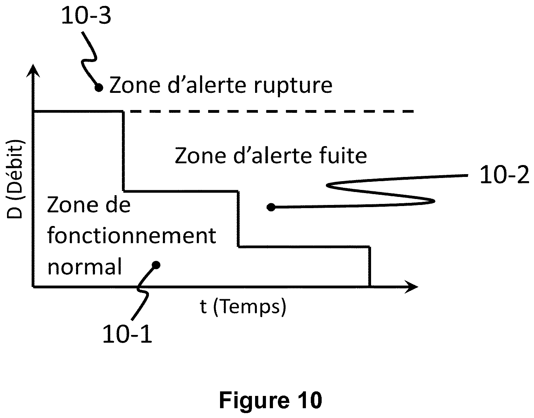

La figure 10 représente sous la forme d'un graphique un gabarit fixant les limites de fonctionnement pour un point d'eau ne possédant pas de dispositif connecté dédié intégrant un capteur de débit. Les gabarits de plusieurs points d'eau ne possédant pas de dispositif connecté dédié intégrant un capteur de débit peuvent être utilisés pour n'en former qu'un représentant les limites de fonctionnement pour le départ d'eau du dispositif connecté alimentant ces points d'eau. La zone de fonctionnement normal (10-1) est la zone dans laquelle le couple débit / temps doit rester. Si le couple débit / temps passe dans la zone d'alerte fuite (10-2), le dispositif connecté alimentant ce ou ces points d'eau doit émettre un signal d'alerte. Si le débit passe au dessus dans la zone d'alerte rupture (10-3), le dispositif connecté alimentant ce ou ces points d'eau doit couper l'alimentation en eau et émettre un signal d'alerte rupture.

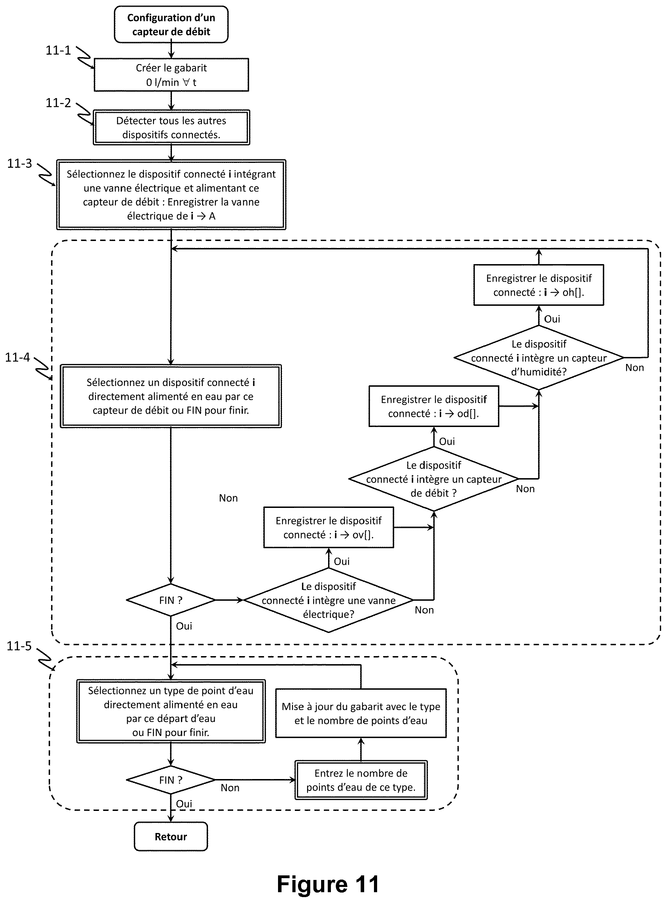

La figure 11 présente sous la forme d'un logigramme une méthode de configuration pour chaque capteur de débit des dispositifs connectés. La première étape (11-1) consiste à créer un gabarit fixant les limites de fonctionnement à :

$$D = 0 \text{ l/min } \forall \text{ t}$$

Où D désigne le débit et t désigne le temps. L'étape suivante (11-2) permet au dispositif connecté de détecter les autres dispositifs connectés au réseau système. L'étape suivante (11-3) permet à l'utilisateur de définir le dispositif connecté intégrant la vanne électrique alimentant ledit capteur de débit configuré par ledit procédé. Cette vanne électrique est enregistrée dans la variable "A". L'étape suivante (11-4) est une boucle permettant à l'utilisateur de définir l'ensemble des dispositifs connectés directement alimentés en eau par ce départ. Ces dispositifs connectés sont enregistrés dans des listes selon l'algorithme suivant :

- Si le dispositif connecté intègre une vanne électrique cette dernière est enregistrée dans la liste dite "ov";
- Si le dispositif connecté intègre un capteur de débit ce dernier est enregistré dans la liste dite "od";
- Si le dispositif connecté intègre un capteur d'humidité il est enregistré dans la liste dite "oh";

La boucle (11-5) permet à l'utilisateur de définir les points d'eau ne possédant pas de dispositif connecté et directement alimenté en eau par ce départ d'eau. Durant cette boucle l'unité logique de traitement élabore le gabarit représentant les limites de fonctionnement pour ces points d'eau.

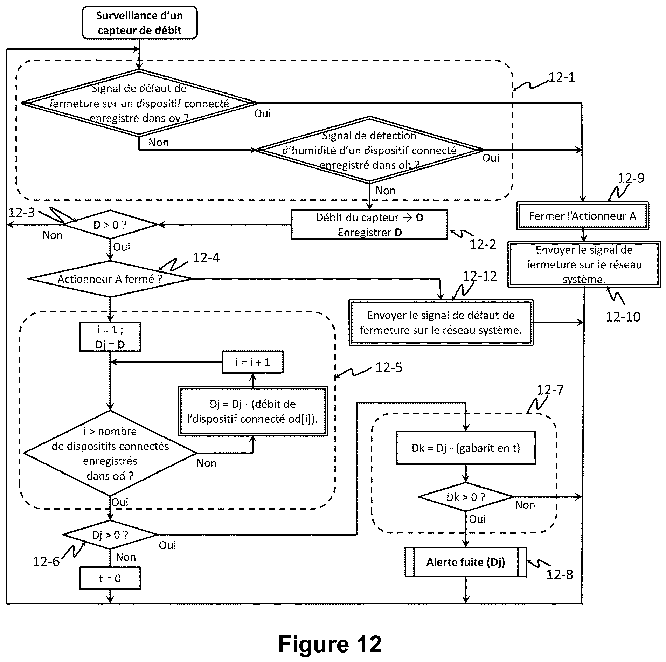

La figure 12 présente sous la forme d'un logigramme une méthode de surveillance pour chaque capteur de débit des dispositifs connectés. La première étape (12-1) permet de réagir si l'un des objets connectés dont la vanne électrique est enregistré dans la liste "ov" a envoyé un signal indiquant que cette vanne électrique ne se ferme pas ou si l'un des objets connecté enregistré dans la liste "oh" a envoyé un signal indiquant qu'il a détecté de l'humidité. Dans l'un de ces cas, l'étape (12-9) ferme la vanne électrique "A", l'étape (12-10) envoi une alerte "fermeture". Sinon, l'étape suivante (12-2) mesure la valeur D fourni par le capteur de débit surveillé par ce procédé. L'étape suivante (12-3) vérifie si ce débit D est supérieur à 0l/min. L'étape suivante (12-4) vérifie que la vanne électrique "A" n'est pas fermée. Si la vanne électrique "A" est fermée cela signifie qu'elle ne fonctionne pas et dans ce cas l'étape (12-12) envoie une alerte "défaut de fermeture" afin d'avertir le dispositif connecté l'alimentant. Si la vanne électrique "A" n'est pas fermée La boucle (12-5) permet au dispositif connecté de calculer :

$$Dj = D - \sum Di$$

Où Dj désigne le débit résiduel, D désigne le débit mesuré en (12-2) et $\sum Di$ désigne la somme des débits mesuré par les capteurs de débit enregistré dans la liste "od". L'étape suivante (12-6) vérifie que le débit résiduel Dj est supérieur à 0. Si oui, l'étape suivante (12-7) utilise le gabarit élaboré lors de la configuration pour déterminer si le débit résiduel est dans la zone de fonctionnement normal. Si ce n'est pas le cas l'étape (12-8) permet d'appeler le procédé d'alerte.

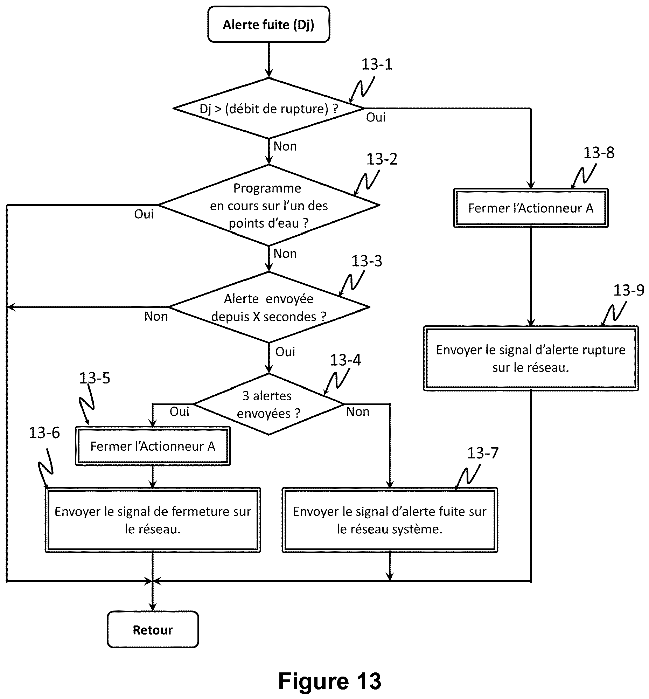

La figure 13 présente sous la forme d'un logigramme une méthode d'alerte pour chaque capteur de débit des dispositifs connectés. La première étape (13-1) utilise le gabarit élaboré lors de la configuration pour déterminer si le débit résiduel Dj est dans la zone d'alerte rupture. Si tel est le cas, le dispositif connecté coupe l'eau sur le départ (13-8) et transmet une alerte "rupture" sur le réseau système (13-9) avant de terminer le procédé. Sinon, l'étape (13-2) vérifie si un programme est en cours sur l'un des points d'eau. Si c'est le cas le procédé se termine. Sinon, l'étape (13-3) vérifie si une alerte à déjà été transmise depuis moins de X secondes où X représente un temps raisonnable pour que l'utilisateur ai le temps de réagir. L'étape (13-4) vérifie si 3 alertes ont déjà été transmises pour le défaut constaté. Si tel est le cas l'étape (13-5) ferme la vanne électrique et l'étape (13-5) transmet une alerte "fermeture" sur le réseau système avant de terminer le procédé. Dans le cas contraire l'étape (13-7) transmet une alerte "fuite" sur le réseau système avant de terminer le procédé.

**Revendications**

1. Système domotique évolutif comprenant une pluralité de dispositif connectés et un réseau système, ledit système domotique évolutif est destiné à la surveillance, à la gestion et au contrôle d'une installation sanitaire et des éléments constituant ladite installation sanitaire au moyen de ladite pluralité de dispositifs connectés communiquant entre eux au travers d'un réseau système, ledit réseau système étant physiquement constitué d'un ou plusieurs sous-réseaux chacun de l'un des types suivants :

   • sans fil ;
   • filaire;
   • mobile, ;

   et dans lequel chacun de la pluralité des dispositifs connectés comprend des moyens matériels et logiciels pour transmettre et recevoir des données sur le réseau internet au travers du réseau système,

   - chacun de la pluralité des dispositifs connectés comportant une interface électronique (1-A, 1-B, 1-C ou 1-D) comportant :

      • une unité logique de traitement (1-A4, 1-B4, 1-C4 ou 1-D4) exécutant un logiciel lui permettant de réaliser sa ou ses fonctions;
      • des moyens matériels et logiciels configurés pour transmettre et recevoir des données sur le réseau système avec tous les autres dispositifs connectés;
      • des moyens matériels et logiciels configurés pour transmettre et recevoir des données sur le réseau système avec des terminaux distants connectés à internet;
      • des moyens matériels et logiciels configurés pour réaliser sa ou ses fonctions en utilisant les données communiquées par d'autres dispositifs connectés de la pluralité de dispositifs connectés ;
      • des moyens matériels et logiciels configurés pour réaliser sa ou ses fonctions en utilisant les données ou les commandes communiquées par des terminaux distants connectés à internet;

• des moyens matériels et logiciels configurés pour transmettre des messages d'alertes ou d'informations vers les terminaux distants.

- chacun de la pluralité de dispositifs connectés étant pris parmi un capteur-actionneur (2-C, 9-4) et/ou un collecteur sanitaire mono coupure (3D) et/ou un collecteur sanitaire multi coupure (3-C) et/ou un collecteur sanitaire mono coupure modulaire (4-F) et/ou un collecteur sanitaire multi coupure modulaire (4-C, 9-12) et/ou un robinet (5A, 5B, 5C, 5D, 9-16) et/ou une bonde d'évacuation (6-B, 6-C, 9-17) et/ou un robinet flotteur (7A, 9-18) et/ou un équipement sanitaire (8B-0, 9-13) et/ou un détecteur d'humidité (8A, 8B-2, 9-14), chacun de la pluralité de dispositifs connectés intégrant une interface (1-A, 1-B, 1-C ou 1-D) configurée pour :

  ◦ transmettre sur le réseau système des informations sur son état de fonctionnement et sur son utilisation de l'eau;
  ◦ modifier son fonctionnement selon les informations qu'il reçoit des autres dispositifs connectés ;
  ◦ être contrôlable au moyen des terminaux distants.

2. Système selon la revendication précédente dans lequel l'interface électronique (1-A, 1-B, 1-C ou 1-D) d'au moins un dispositif connecté de la pluralité de dispositifs connectés comprend des moyens matériels et logiciels pour assurer la fonction de répéteur afin d'étendre la portée du signal sur le support de transmission du réseau système pour assurer l'interconnexion de tous les dispositifs connectés.

3. Système selon l'une des revendications précédentes dans lequel l'interface électronique (1-A, 1-B, 1-C ou 1-D) d'au moins un dispositif connecté de la pluralité de dispositifs connectés comprend des moyens matériels et logiciels pour assurer la fonction de passerelle afin d'interconnecter deux sous-réseaux utilisant chacun un protocole différent.

4. Système selon la revendication 1, comprenant un capteur-actionneur, comprenant :

   • un raccord d'arrivée d'eau (2A-2, 2B-2 ou 2C-2) à une extrémité et un raccord de départ d'eau (2A-3, 2B-3 ou 2C-3) à l'autre extrémité permettant le raccordement dudit dispositif connecté capteur-actionneur sur une canalisation de l'installation sanitaire;
   • une vanne électrique (2A-4 ou 2B-4) permettant, en utilisant un signal électrique, de commander le débit de l'eau circulant dans la canalisation sur laquelle ledit dispositif connecté capteur-actionneur est monté;
   • un capteur de débit (2A-5 ou 2B-5) fournissant un signal électrique, ledit signal électrique possédant au moins une caractéristique variable en fonction du débit circulant dans la canalisation sur laquelle ledit capteur-actionneur est monté,

   ledit capteur-actionneur étant de préférence un capteur de pression (2B-6) fournissant un autre signal électrique dont au moins une des caractéristiques varie en fonction de la pression de l'eau sur l'arrivée d'eau dudit capteur-actionneur.

5. Système selon la revendication 1, comprenant un collecteur sanitaire mono-coupure qui comprend une pluralité de départs de circuit et une vanne unique, ledit collecteur sanitaire mono-coupure comprenant :

   • un raccord d'arrivée d'eau (3B-2 ou 3D-2) à chacune des deux extrémités dudit collecteur sanitaire mono-coupure afin de raccorder la canalisation primaire et/ou un autre collecteur sanitaire;
   • un raccord pour chaque départ d'eau (3B-3 ou 3D-3) sur le côté dudit collecteur sanitaire mono-coupure permettant le raccordement à des canalisations secondaires et permettant d'installer ledit collecteur sanitaire mono-coupure en lieu et place d'un collecteur sanitaire classique;
   • une vanne électrique (3B-4) permettant, en utilisant un signal électrique, de commander le débit de l'eau circulant vers tous les départs d'eau dudit dispositif connecté collecteur sanitaire mono-coupure;
   • un capteur de débit (3B-5) pour chaque départ d'eau fournissant un signal électrique dont au moins une des caractéristiques varie en fonction du débit circulant vers le départ d'eau sur lequel le capteur est raccordé.

6. Système selon la revendication 5, comprenant un collecteur sanitaire multi-coupures qui comprend une pluralité de départs de circuit et une pluralité de vannes au départ d'eau, ledit collecteur sanitaire multi-coupures comprenant :

   • un raccord d'arrivée d'eau (3A-2 ou 3C-2) à chacune des deux extrémités dudit collecteur sanitaire multi-coupures afin de raccorder la canalisation primaire et/ou un autre collecteur sanitaire;
   • un raccord pour chaque départ d'eau (3A-3 ou 3C-3) sur le côté dudit collecteur sanitaire mono-coupure permettant le raccordement des canalisations secondaires et permettant d'installer ledit collecteur sanitaire mono-coupure

• une vanne électrique (3A-4) pour chaque départ d'eau permettant, en utilisant un signal électrique, de commander le débit de l'eau circulant vers le départ d'eau sur lequel la vanne électrique est raccordée;

• un capteur de débit (3A-5) pour chaque départ d'eau fournissant un signal électrique dont au moins une des caractéristiques varie en fonction du débit circulant vers le départ d'eau sur lequel le capteur est raccordé.

7. Système selon la revendication 5, dans lequel le collecteur sanitaire modulaire mono-coupure comprend:

• un dispositif connecté configuré sur la base du collecteur sanitaire mono-coupure et appelé module de base mono-coupure (4F-0a) comprenant :

◦ un raccord d'arrivée d'eau (4D-2 ou 4F-2a) permettant le raccordement de la canalisation primaire;
◦ un raccord de départ d'eau primaire (4D-6 ou 4F-6) permettant le raccordement d'un dispositif connecté appelé module additionnel mono-coupure;
◦ un connecteur électrique (4D-7 ou 4F-7) permettant de connecter le module additionnel mono-coupure sur le réseau système filaire fournit par ledit module de base mono-coupure en utilisant si besoin la fonction passerelle;
◦ un raccord de départ d'eau secondaire (4D-3 ou 4F-3) permettant le raccordement d'une canalisation secondaire;
◦ une vanne électrique (4D-4) permettant, en utilisant un signal électrique, de commander le débit de l'eau circulant vers le départ d'eau primaire (4D-6 ou 4F-6) et vers le départ d'eau secondaire (4D-3 ou 4F-3);
◦ un capteur de débit (4D-5) fournissant un signal électrique dont au moins une des caractéristiques varie en fonction du débit circulant vers le départ d'eau secondaire (4D-3 ou 4F-3);

• une pluralité de dispositifs connectés configurés sur la base du collecteur sanitaire mono-coupure et appelés modules additionnels mono-coupure (4F-0b) et qui sont configurés pour former chacun un collecteur sanitaire permettant le raccordement dudit collecteur sanitaire modulaire mono-coupure en lieu et place d'un collecteur sanitaire classique et dans lequel chacun desdits modules additionnels mono-coupure comprend :

◦ un raccord d'arrivée d'eau (4E-2 ou 4F-2b) permettant de raccorder ledit module additionnel mono-coupure sur le module de base mono-coupure ou sur un autre module additionnel mono-coupure;
◦ un connecteur électrique (4E-8 ou 4F-8) permettant de connecter ledit module additionnel mono-coupure sur le système filaire fournit par le module de base mono-coupure ou transmis par un autre module additionnel mono-coupure;
◦ un raccord de départ d'eau primaire (4E-6 ou 4F-6) permettant le raccordement d'un autre module additionnel mono-coupure;
◦ un connecteur électrique (4E-7 ou 4F-7) permettant de connecter un autre module additionnel mono-coupure sur le réseau système fourni par le module de base mono-coupure et transmis par ledit module additionnel mono-coupure;
◦ un raccord de départ d'eau secondaire (4E-3 ou 4F-3) permettant le raccordement d'une canalisation secondaire;
◦ un capteur de débit (4E-5) fournissant un signal électrique dont au moins une des caractéristiques varie en fonction du débit circulant vers le départ d'eau secondaire (4E-3 ou 4F-3).

8. Système selon la revendication 6, comprenant un collecteur sanitaire modulaire multi-coupure qui comprend :

• un dispositif connecté configuré sur la base du dispositif collecteur sanitaire multi-coupures et appelé module de base multi-coupure (4C-0a) et comprenant :

◦ un raccord d'arrivée d'eau (4A-2 ou 4C-2a) permettant le raccordement de la canalisation primaire;
◦ un raccord de départ d'eau primaire (4A-6 ou 4C-6) permettant le raccordement d'un module additionnel multi-coupure;
◦ un connecteur électrique (4A-7 ou 4C-7) permettant de connecter un module additionnel multi-coupure sur le réseau système filaire fournit par ledit module de base multi-coupure en utilisant si besoin la fonction passerelle;
◦ un raccord de départ d'eau secondaire (4A-3 ou 4C-3) permettant le raccordement d'une canalisation secondaire;
◦ une vanne électrique (4A-4) permettant, en utilisant un signal électrique, de commander le débit de l'eau circulant vers le départ d'eau secondaire (4A-3 ou 4C-3);
◦ un capteur de débit (4A-5) fournissant un signal électrique dont au moins une des caractéristiques varie en fonction du débit circulant vers le départ d'eau secondaire (4A-3 ou 4C-3);

• une pluralité de dispositifs connectés configurés sur la base du collecteur sanitaire multi-coupures et appelés modules additionnels multi-coupure (4C-0b) sont configurés pour former un collecteur sanitaire permettant le raccordement dudit collecteur sanitaire modulaire multi-coupure en lieu et place d'un collecteur sanitaire classique et dans lequel chacun de la pluralité des modules additionnels multi-coupure comprend :

◦ un raccord d'arrivée d'eau (4B-2 ou 4C-2b) permettant de raccorder ledit module additionnel multi-coupure sur le module de base multi-coupure ou sur un autre module additionnel multi-coupure;
◦ un connecteur électrique (4B-8 ou 4C-8) permettant de connecter ledit module additionnel multi-coupure sur le système filaire fourni par le module de base multi-coupure ou transmis par un autre module additionnel multi-coupure;
◦ un raccord de départ d'eau primaire (4B-6 ou 4C-6) permettant le raccordement d'un autre module additionnel multi-coupure;
◦ un connecteur électrique (4B-7 ou 4C-7) permettant de connecter un autre module additionnel multi-coupure sur le réseau système fournit par le module de base multi-coupure et transmis par ledit module additionnel multi-coupure;
◦ un raccord de départ d'eau secondaire (4B-3 ou 4C-3) permettant le raccordement d'une canalisation secondaire;
◦ une vanne électrique (4B-4) permettant, en utilisant un signal électrique, de commander le débit de l'eau circulant vers le départ d'eau secondaire (4B-3 ou 4C-3);
◦ un capteur de débit (4B-5) fournissant un signal électrique dont au moins une des caractéristiques varie en fonction du débit circulant vers le départ d'eau secondaire (4B-3 ou 4C-3).

9. Système selon la revendication 1 comprenant un robinet, ledit robinet et pris parmi l'un des robinet simple ou robinet mélangeur ou robinet mitigeur, ledit robinet comprenant:
un raccord d'arrivée d'eau pour le robinet simple ou deux raccords d'arrivées d'eau (5A-2) pour le robinet mitigeur et le robinet mélangeur; et dans lequel pour chaque arrivée d'eau dudit robinet, un débitmètre (5C-5, 5D-5) de débit fournissant un signal électrique dont au moins une des caractéristiques varie en fonction du débit circulant dans l'arrivée d'eau (5C-2, 5D-2) sur laquelle le capteur est raccordé.

10. Système selon la revendication précédente comprenant un capteur (5A-3) lorsque le dispositif connecté est un robinet simple et/ou un robinet mitigeur ou deux capteurs lorsque le dispositif connecté est un robinet mélangeur, chacun de ces capteurs fournissant un signal électrique dont au moins une des caractéristiques varie en fonction de la position du mécanisme du robinet permettant de détecter l'ouverture dudit robinet,
et dans lequel une vanne électrique (5B-4 ou 5D-4) est configurée pour permettre, en utilisant le signal électrique, de modifier le débit circulant dans ledit au moins un robinet simple ou robinet mélangeur ou robinet mitigeur.

11. Système selon la revendication 1, comprenant un robinet flotteur qui comprend :

• un raccord d'arrivée d'eau (7A-2) permettant le raccordement dudit robinet flotteur sur une canalisation de l'installation sanitaire;
• un départ d'eau (7A-3) permettant le remplissage du réservoir;
• un flotteur (7A-6) solidaire d'un capteur de position (7A-5) permettant de mesurer le niveau d'eau dans un réservoir;
• une vanne électrique (7A-4) permettant, en utilisant un signal électrique, de commander le débit de l'eau circulant vers le départ d'eau (7A-3).

12. Système selon la revendication 1, comprenant une bonde d'évacuation qui comprend :

• soit une vanne électrique (6C-4) muni d'un capteur de position (6C-5) permettant, en utilisant un signal électrique, de commander le débit de l'eau circulant depuis l'arrivé d'eau (6C-2) vers le départ (6C-3) et ainsi de contrôler l'écoulement de l'eau dans l'évacuation;
• soit un mécanisme (6A ou 6B-2) comportant

◦ un dispositif (6A-2e) permettant, en utilisant un signal électrique, de modifier la position des tiges de manoeuvre (6A-3 ou 6B-3) afin de faire monter ou descendre la bonde d'évacuation (6B-4) et ainsi de contrôler l'écoulement de l'eau dans l'évacuation;
◦ un capteur de position (6A-2c) permettant de contrôler la bonne ouverture et la bonne fermeture de la bonde d'évacuation (6B-4).

13. Procédé, comprenant une phase de configuration des capteurs de débit du système selon l'une des revendications 4 à 9, ledit procédé étant **caractérisé en ce que** la phase de configuration comprend :

• une étape (11-1) de création d'un gabarit de fonctionnement de débit de référence ayant comme caractéristique $D = 0$ l/min $\forall$ t, D désignant le débit et t désignant le temps;

• une étape (11-2) de détection du nombre et du type des autres dispositifs connectés de la pluralité de dispositifs connectés dans le réseau système;

• une étape (11-3) permettant de définir le dispositif connecté intégrant une vanne électrique alimentant en eau ledit capteur de débit et permettant à l'unité logique de traitement d'enregistrer cette vanne électrique dans une variable dite A;

• une série d'étapes (11-4) permettant de définir les dispositifs connectés directement alimentés en eau par ledit capteur de débit et permettant à l'unité logique de traitement d'exécuter l'algorithme suivant :

◦ si le dispositif connecté intègre une vanne électrique, cette dernière est enregistrée dans une première liste dite ov;

◦ si le dispositif connecté intègre un capteur de débit, ce dernier est enregistré dans une seconde liste dite od;

◦ si le dispositif connecté intègre un capteur d'humidité, il est enregistré dans une troisième liste dite oh;

• une série d'étapes (11-5) permettant à l'unité logique de traitement d'élaborer le gabarit (10) fixant les limites de fonctionnement pour les points d'eau ne possédant pas de dispositif connecté dédié intégrant un capteur de débit et dont l'alimentation en eau est directement contrôlée par ledit capteur de débit.

14. Procédé selon la revendication précédente, ledit procédé comprenant une phase de surveillance et étant **caractérisé en ce que** la phase de surveillance comprend :

• une étape (12-1) permettant à l'unité logique du au moins un dispositif connecté de réagir si l'un des objets connectés dont la vanne électrique est enregistrée dans la liste ov a envoyé un signal indiquant que cette vanne électrique ne se ferme pas ou si l'un des objets connectés enregistrés dans la liste dite oh a envoyé un signal indiquant qu'il a détecté de l'humidité ladite réaction consistant à fermer la vanne électrique A (12-9) et à envoyer une alerte de fermeture sur le réseau système (12-10);

• une étape (12-2) de mesure de la valeur D fournie par le capteur de débit;

• une étape (12-3) permettant de vérifier $D > 0$ l/min, D désignant le débit mesuré à l'étape (12-2) et retournant à l'étape (12-1) dans le cas contraire;

• une étape (12-4) permettant de vérifier que la vanne électrique A n'est pas fermée ce qui signifie qu'elle est en défaut et passe directement à l'étape (12-12) pour envoyer une alerte défaut de fermeture afin d'avertir le dispositif connecté l'alimentant et retourne à l'étape (12-1);

• une série d'étapes bouclées (12-5) permettant de calculer $Dj = D - \sum Di$, Dj désignant le débit résiduel, D désignant le débit mesuré en (12-2) et $\sum Di$ désignant la somme des débits mesurés par les capteurs de débits enregistrés dans la liste od;

• une étape (12-6) permettant de vérifier que le débit résiduel Dj est supérieur à 0 et retournant dans le cas contraire à l'étape (12-1);

• une étape (12-7) utilisant le gabarit élaboré lors de la configuration pour déterminer si le débit résiduel Dj n'est pas dans la zone de fonctionnement normal et donc si un procédé d'alerte (12-8) doit être appelé avec comme paramètre le débit résiduel Dj et retournant dans tous les cas à l'étape (12-1).

15. Procédé selon l'une des deux revendications précédentes, ledit procédé comprenant une phase d'alerte des capteurs de débit du système et étant **caractérisé en ce que** la phase d'alerte comprend :

• une étape (13-1) utilisant le gabarit élaboré lors de la configuration pour passer à l'étape (13-8) si le débit résiduel est dans la zone d'alerte rupture ou pour passer à l'étape (13-2) dans le cas contraire;

• des étapes (13-8, 13-9) permettant de fermer la vanne électrique A et de transmettre une alerte rupture sur le réseau système avant de mettre fin au procédé;

• une étape (13-2) vérifiant qu'aucune instruction utilisateur n'est en cours et mettant fin au procédé dans le cas contraire;

• une étape (13-3) vérifiant qu'aucune alerte n'a déjà été transmise depuis moins de X secondes, X représentant un temps raisonnable pour que l'utilisateur ait le temps de réagir et mettant fin au procédé dans le cas contraire;

• une étape (13-4) vérifiant si trois alertes ont déjà été transmises pour passer à l'étape (13-5) si tel est le cas ou à l'étape (13-7) sinon;

• des étapes (13-5, 13-6) permettant au dispositif connecté de couper l'eau sur le départ et de transmettre une alerte fermeture sur le réseau système avant de mettre fin au procédé ;

• une étape (13-7) permettant de transmettre une alerte fuite sur le réseau système avant de mettre fin au procédé.

## Patentansprüche

1. Ein entwicklungsfähiges Gebäudesystem mit verschiedenen verbundenen Geräten und einem Netzwerksystem zur Überwachung, Verwaltung und Steuerung einer Sanitäreinrichtung und der Elemente, aus denen diese Sanitäreinrichtung besteht, durch Verwendung der verschiedenen verbundenen Geräten, die miteinander über ein Netzwerksystem kommunizieren, wobei dieses Netzwerksystem physisch aus einem oder mehreren Unternetzwerken jeweils eines der nachfolgenden Typen besteht:

   • drahtlos;
   • drahtgebunden;
   • mobil;

   und in dem jedes dieser verbundenen Geräte die materiellen und Softwarevoraussetzungen zur Übertragung und Empfang von Daten im Netzwerksystem über das Internet enthält,

   - jedes dieser verschiedenen verbundenen Geräte enthält eine elektronische Schnittstelle (1-A, 1-B, 1-C oder 1-D), die enthält:

      • eine logische Verarbeitungseinheit (1-A4, 1-B4, 1-C4 oder 1-D4) zur Ausführung einer Software, mit der es seine Funktion oder Funktionen ausführen kann;
      • materielle und Softwaremittel, konfiguriert zur Übertragung und dem Empfang von Daten im Netzwerksystem an allen anderen verbundenen Geräten;
      • materielle und Softwaremittel, konfiguriert zur Übertragung und dem Empfang von Daten im Netzwerksystem an externen, mit dem Internet verbundenen Terminals;
      • materielle und Softwaremittel, zur Ausführung seiner Funktion oder Funktionen unter Verwendung der von anderen verbundenen Geräten dieser verschiedenen verbundenen Geräten übermittelten Daten;
      • materielle und Softwaremittel, konfiguriert zur Ausführung seiner Funktion oder Funktionen unter Verwendung der Daten oder Befehle der externen, mit dem Internet verbundenen Terminals;
      • materielle und Softwaremittel, konfiguriert zur Übertragung von Warnmeldungen oder Informationen an die externen Terminals,

   - wobei es sich bei den verschiedenen verbundenen Geräten jeweils handeln kann um einen Sensor/Aktor (2-C, 9-4) und/oder Sanitär- Sammelrohr mit Mono- Unterbrechung (3D) und/oder Sanitär- Sammelrohr mit Multi-Unterbrechung (3-C) und/oder Sanitär- Sammelrohr mit modularer Mono-Unterbrechung (4-F) und/oder Sanitär- Sammelrohr mit modularer Multi-Unterbrechung (4-C, 9-12) und/oder Hahn (5A, 5B, 5C, 5D, 9-16) und/oder Ablauf (6-B, 6-C, 9-17) und/oder Schwimmerventil (7A, 9-18) und/oder Sanitärgerät (8B-0, 9-13) und/oder Feuchtigkeitssensor (8A, 8B-2, 9-14), wobei jedes der verschiedenen verbundenen Geräte eine Schnittstelle (1-A, 1-B, 1-C oder 1-D) enthält, die dazu konfiguriert ist:

   o an das Netzwerksystem Informationen zu seinem Betriebszustand und zum Wasserverbrauch zu übertragen;
   ◦ seinen Betrieb entsprechend den von den anderen verbundenen Geräten erhaltenen Informationen zu verändern;
   ◦ über externe Terminals gesteuert zu werden.

2. System nach dem vorhergehenden Anspruch, bei dem die elektronische Schnittstelle (1-A, 1-B, 1-C oder 1-D) mindestens eines Geräts dieser verschiedenen verbundenen Geräte materielle und Softwaremittel enthält, um die Funktion eines Verstärkers zu übernehmen, um die Reichweite des Signals auf dem Übertragungsmedium des Netzwerksystems zu erhöhen um die Verbindung zwischen allen verbundenen Geräten zu gewährleisten.

3. System nach irgendeinem der vorstehenden Ansprüche, bei dem die elektronische Schnittstelle (1-A, 1-B, 1-C oder 1-D) mindestens eines Geräts dieser verschiedenen verbundenen Geräte materielle und Softwaremittel enthält, um die Funktion eines Gateway zu übernehmen, um zwei Unter- Netzwerke miteinander zu verbinden, die jeweils ein anderes Protokoll benutzen.

4. System nach Anspruch 1, mit einem Sensor/Aktor, der enthält:

   • einen Wassereinlass (2A-2, 2B-2 oder 2C-2) an einem Ende und einen Wasserauslass (2A-3, 2B-3 oder 2C-3) am anderen Ende, der den Anschluss dieses verbundenen Sensors/Aktors an der Leitung der Sanitäranlage ermöglicht;
   • ein Magnetventil (2A-4 oder 2B-4), das es ermöglicht, unter Verwendung eines elektrischen Signals die Wassermenge zu steuern, die in der Leitung fließt, an der dieser verbundene Sensor/Aktor montiert ist;
   • ein Durchflusssensor (2A-5 oder 2B-5), der ein elektrisches Signal sendet, dieses Signal besitzt mindestens eine in Abhängigkeit vom Durchsatz der Leitung, auf der dieser verbundene Sensor/ Aktor montiert ist, variable Eigenschaft,

bei diesem Sensor/ Aktor sollte es sich möglichst um einen Druckfühler (2B-6) handeln, der ein anderes elektrisches Signal sendet, mindestens eine Eigenschaft dieses Signals variiert in Abhängigkeit vom Wasserdruck am Einlass dieses Sensors/ Aktors.

5. System nach Anspruch 1, mit einem Sanitär- Sammelrohr mit Mono-Unterbrechung, mit verschiedenen Anfangssträngen und einem einzigen Ventil, dieses Sanitär- Sammelrohr mit Mono- Unterbrechung umfasst

• einen Wassereinlass (3B-2 oder 3D-2) an jedem der beiden Enden dieses Sanitär- Sammelrohrs mit Mono- Unterbrechung zum Anschluss der primären Leitung und/ oder einem anderen Sanitär- Sammelrohr;
• einen Anschluss für jeden Wasserauslass (3B-3 oder 3D-3) auf der Seite dieses Sanitär- Sammelrohrs mit Mono- Unterbrechung, der den Anschluss von sekundären Leitungen ermöglicht und damit die Installation dieses Sanitär- Sammelrohrs mit Mono- Unterbrechung an Stelle eines herkömmlichen Sanitär- Sammelrohrs ermöglicht;
• ein Magnetventil (3B-4), das es ermöglicht, unter Verwendung eines elektrischen Signals die Wassermenge hin zu allen Wasserauslässen dieses verbundenen Geräts Sanitär- Sammelrohr mit Mono- Unterbrechung zu steuern;
• ein Durchflusssensor (3B-5) für jeden Wasserauslass, der ein elektrisches Signal sendet, das mindestens eine Eigenschaft besitzt, die in Abhängigkeit von der Wassermenge, die zum Wasserauslass fließt, an dem der Sensor angeschlossen ist, variiert.

6. System nach Anspruch 5, mit einem Sanitär- Sammelrohr mit Multi-Unterbrechung, mit verschiedenen Anfangssträngen und mehreren Ventilen am Wasserauslass, dieses Sanitär- Sammelrohr mit Multi- Unterbrechung umfasst:

• einen Wassereinlassanschluss (3A-2 oder 3C-2) an jedem der beiden Enden dieses Sanitär- Sammelrohr mit Multi- Unterbrechung zum Anschluss der primären Leitung und/ oder eines anderen Sanitär- Sammelrohrs;
• einen Anschluss für jeden Wasserauslass (3A-3 oder 3C-3) auf der Seite dieses Sanitär- Sammelrohrs mit Multi- Unterbrechung, der den Anschluss von sekundären Leitungen ermöglicht und damit die Installation dieses Sanitär-Sammelrohrs mit Mono-(sic!)-Unterbrechung ermöglicht;
• ein Magnetventil (3A-4) für jeden Wasserauslass, das es ermöglicht, unter Verwendung eines elektrischen Signals die Wassermenge hin zu allen Wasserauslässen, an die das Magnetventil angeschlossen ist, zu steuern;
• einen Durchflusssensor (3A-5) für jeden Wasserauslass, der ein elektrisches Signal sendet, dieses Signal besitzt mindestens eine Eigenschaft, die in Abhängigkeit von der Wassermenge, die zum Wasserauslass fließt, an dem der Sensor angeschlossen ist, variiert.

7. System nach Anspruch 5, bei dem das modulare Sanitär- Sammelrohr mit Mono- Unterbrechung umfasst:

• ein verbundenes Gerät, konfiguriert auf Basis des Sanitär- Sammelrohrs mit Mono- Unterbrechung das Mono- Unterbrechungs- Basismodul (4F-0a) genannt wird, umfassend:

o einen Wassereinlass (4D-2 oder 4F-2a) der den Anschluss der primären Leitung ermöglicht;
◦ einen Wasserauslass für Primärwasser (4D-6 oder 4F-6), der den Anschluss eines verbundenen Gerätes, zusätzliches Mono- Unterbrechungsmodul genannt, ermöglicht.
◦ einen Stromstecker (4D-7 oder 4F-7), mit dem das zusätzliche Mono-Unterbrechungsmodul am drahtgebundenen Netzwerksystem, das von diesem Mono- Unterbrechungs- Basismodul bereitgestellt wird, angeschlossen werden kann, wenn notwendig unter Nutzung der Gateway-Funktion;
◦ einen sekundären Wasserauslass (4D-3 oder 4F-3), mit dem eine sekundäre Leitung angeschlossen werden kann;
◦ ein Magnetventil (4D-4) das es ermöglicht, unter Verwendung eines elektrischen Signals die Wassermenge hin zum primären Wasserauslass (4D-6 oder 4F-6) oder zum sekundären Wasserauslass (4D-3 oder 4F-3) zu steuern;
◦ ein Durchflusssensor (4D-5), der ein elektrisches Signal sendet, das mindestens eine Eigenschaft besitzt, die in Abhängigkeit von der Wassermenge, die zum sekundären Wasserauslass (4D-3 oder 4F-3) fließt, variiert.

• verschiedene verbundene Geräte, konfiguriert auf Grundlage des Sanitär-Sammelrohrs mit Mono- Unterbrechung, die zusätzliche Mono-Unterbrechungs- Module (4F-0a) genannt werden und die dazu konfiguriert sind, jeweils ein Sanitär- Sammelrohr zu bilden, mit dem dieses Sanitär-Sammelrohr mit Mono- Unterbrechung an Stelle eine herkömmlichen Sanitär-Sammelrohr angeschlossen werden kann und bei dem jedes dieser zusätzlichen Mono- Unterbrechungs- Module umfasst:

◦ einen Wassereinlass (4E-2 oder 4F-2b), mit dem dieses zusätzliche Mono-Unterbrechungs- Modul am Mono- Unterbrechungs-Basismodul oder einem anderen zusätzlichen Mono- Unterbrechungs- Modul angeschlossen werden kann;
◦ einen Stromstecker (4E-8 oder 4F-8), mit dem dieses zusätzliche Mono-Unterbrechungsmodul am drahtgebundenen Netzwerksystem, das von diesem Mono- Unterbrechungs- Basismodul bereitgestellt oder einem anderen zusätzlichen Mono- Unterbrechungs- Modul übermittelt wird, angeschlossen werden kann;
◦ einen primären Wasserauslass (4E-6 oder 4F-6), mit dem ein weiteres zusätzliches Mono- Unterbrechungs- Modul angeschlossen werden kann;
◦ einen Stromstecker (4E-7 oder 4F-7), mit dem ein weiteres zusätzliches Mono- Unterbrechungsmodul am Netzwerksystem, das von diesem Mono-Unterbrechungs-Basismodul bereitgestellt und von diesem zusätzlichen Mono- Unterbrechungs- Modul weitergeleitet wird, angeschlossen werden kann;
◦ einen sekundären Wasserauslass (4E-3 oder 4F-3), mit dem eine sekundäre Leitung angeschlossen werden kann;
◦ ein Durchflusssensor (4E-5), der ein elektrisches Signal liefert, das mindestens eine Eigenschaft besitzt, die in Abhängigkeit von der Wassermenge, die zum sekundären Wasserauslass fließt (4E-3 oder 4F-3) variiert.

8. System nach Anspruch 6, mit einem modularen Sanitär- Sammelrohr mit Multi- Unterbrechung, das umfasst:

• ein verbundenes Gerät, konfiguriert auf Basis des Sanitär- Sammelrohrs mit Multi- Unterbrechung das Multi- Unterbrechungs- Basismodul (4C-0a) genannt wird, umfassend:

◦ einen Wassereinlass (4A-2 oder 4C-2a) der den Anschluss der primären Leitung ermöglicht;
◦ einen primären Wasserauslass (4A-6 oder 4F-6), der den Anschluss zusätzlichen Multi- Unterbrechungsmodul ermöglicht;
◦ ein Stromstecker (4A-7 oder 4C-7), mit dem ein zusätzliches Multi-Unterbrechungsmodul am drahtgebundenen Netzwerksystem, das von diesem Multi- Unterbrechungs- Basismodul bereitgestellt wird, angeschlossen werden kann, wenn notwendig unter Nutzung der Gateway-Funktion;
◦ ein sekundärer Wasserauslass (4A-3 oder 4C-3), mit dem eine sekundäre Leitung angeschlossen werden kann;
◦ ein Magnetventil (4A-4) das es ermöglicht, unter Verwendung eines elektrischen Signals die Wassermenge hin zum sekundären Wasserauslass (4A-3 oder 4C-3) zu steuern;
◦ ein Durchflusssensor (4A-5), der ein elektrisches Signal sendet, das mindestens eine Eigenschaft besitzt, die in Abhängigkeit von der Wassermenge, die zum sekundären Wasserauslass (4A-3 oder 4C-3) fließt, variiert;

• verschiedene verbundene Geräte, konfiguriert auf Grundlage des Sanitär-Sammelrohrs mit Multi- Unterbrechung, die zusätzliche Multi- Unterbrechungs-Module (4C-0b) genannt werden, sind dazu konfiguriert, jeweils ein Sanitär-Sammelrohr zu bilden, mit dem dieses Sanitär-Sammelrohr mit Multi-Unterbrechung an Stelle eines herkömmlichen Sanitär- Sammelrohrs angeschlossen werden kann und bei dem jedes dieser zusätzlichen Multi-Unterbrechungs- Module umfasst:

◦ einen Wassereinlass (4B-2 oder 4C-2b), mit dem dieses zusätzliche Multi-Unterbrechungs- Modul am zusätzlichen Multi- Unterbrechungs- Basismodul oder einem weiteren zusätzlichen Multi- Unterbrechungs-Modul angeschlossen werden kann:

◦ einen Stromstecker (4B-8 oder 4C-8), mit dem dieses zusätzliche Multi-Unterbrechungsmodul am drahtgebundenen Netzwerksystem, das von diesem Multi- Unterbrechungs- Basismodul bereitgestellt oder einem anderen zusätzlichen Multi- Unterbrechungs- Modul übermittelt wird, angeschlossen werden kann;
◦ einen primären Wasserauslass (4B-6 oder 4C-6), mit dem ein weiteres zusätzliches Multi- Unterbrechungs- Modul angeschlossen werden kann;
◦ einen Stromstecker (4B-7 oder 4C-7), mit dem ein weiteres zusätzliches Multi- Unterbrechungsmodul am drahtgebundenen Netzwerksystem, bereitgestellt von diesem Multi- Unterbrechungs-Basismodul und übermittelt von diesem zusätzlichen Multi- Unterbrechungs- Modul, angeschlossen werden kann;

∘ ein sekundärer Wasserauslass (4B-3 oder 4C-3), mit dem eine sekundäre Leitung angeschlossen werden kann;

∘ ein Magnetventil (4B-4) das es ermöglicht, unter Verwendung eines elektrischen Signals die Wassermenge hin zum sekundären Wasserauslass (4B-3 oder 4C-3) zu steuern;

∘ ein Durchflusssensor (4B-5), der ein elektrisches Signal sendet, das mindestens eine Eigenschaft besitzt, die in Abhängigkeit von der Wassermenge, die zum sekundären Wasserauslass (4B-3 oder 4C-3) fließt, variiert.

9. System nach Anspruch 1, mit einem Hahn, bei diesem Hahn kann es sich um einen einfachen Hahn, eine Mischbatterie oder ein Mischventil handeln, wobei dieser Hahn umfasst:

einen Wassereinlass für den einfachen Hahn oder zwei Wassereinlässe (5A-2) für die Mischbatterie oder das Mischventil und in dem für jeden Wassereinlass dieses Hahns ein Durchflussmesser (5C-5, 5D-5) ein elektrisches Signal liefert, das mindestens eine Eigenschaft besitzt, die in Abhängigkeit von der Wassermenge, die zum Wassereinlass (5C-2, 5D-2) fließt, an den der Sensor angeschlossen ist, variiert.

10. System nach dem vorhergehenden Anspruch, mit einem Sensor (5A-3), wenn das verbundene Gerät ein einfacher Hahn ist und/ oder zwei Sensoren, wenn das verbundene Gerät eine Mischbatterie oder ein Mischventil ist, jeder dieser Sensoren liefert ein elektrisches Signal, das mindestens eine Eigenschaft besitzt, die in Abhängigkeit von der Position des Hahnmechanismus variiert, mit der die Öffnung dieses Hahns festgestellt werden kann, und in dem ein Magnetventil (5B-4 oder 5D-4) dazu konfiguriert ist, unter Verwendung des elektrischen Signals die Durchflussmenge zu ändern, die in diesem einfachen Hahn, der Mischbatterie oder dem Mischventil fließt.

11. System nach Anspruch 1, mit einem Schwimmerventil, das umfasst:

• einen Wassereinlass (7A-2) der den Anschluss dieses Schwimmerventils an einer Leitung der Sanitäranlage ermöglicht;

• einen Wasserauslass (7A-3) zum Füllen des Reservoirs;

• einen Schwimmer (7A-6), fest verbunden mit einem Positionssensor (7A-5) mit dem der Wasserpegel in einem Reservoir gemessen werden kann;

• ein Magnetventil (7A-4), das es ermöglicht, unter Verwendung eines elektrischen Signals die Wassermenge hin zum Wasserauslass (7A-3) dieses verbundenen Geräts zu steuern;

12. System nach Anspruch 1, mit einem Ablauf, das umfasst:

• entweder ein Magnetventil (6C-4) versehen mit einem Positionssensor (6C-5) mit dem, unter Verwendung eines elektrischen Signals die Wassermenge gesteuert werden kann, die vom Wassereinlass (6C-2) zum Auslass (6C-3) fließt zu steuern und so den Wasserabfluss in den Ablauf zu steuern;

• oder einen Mechanismus (6A oder 6B-2), der enthält:

∘ eine Vorrichtung (6A-2e) durch die unter Verwendung eines elektrischen Signals die Position der Bedienstäbe (6A-3 oder 6B-3) zu verändern, um den Ablauf zu heben oder zu senken (6B-4) und so den Abfluss des Wassers in den Ablauf zu steuern;

∘ ein Positionssensor (6A-2c), mit dem das richtige Öffnen und Schließen des Ablaufs (6B-4) kontrolliert werden kann.

13. Verfahren mit einer Konfigurationsphase der Durchflussmesser des Systems nach einem der Ansprüche 4 bis 9, dieses Verfahren ist **dadurch gekennzeichnet, dass** die Konfigurationsphase umfasst:

• einen Schritt (11-1) der Erstellung einer Funktionsschablone des Referenzdurchsatzes zu erstellen, mit der Formel D = 0 l/min V t, D bezeichnet den Durchsatz und t bezeichnet die Zeit;

• einen Schritt (11-2) zur Erkennung der Anzahl und des Typs der anderen verbundenen Geräte der verschiedenen verbundenen Geräte im Netzwerksystem;

• einen Schritt (11-3) zur Definition des verbundenen Gerätes, das ein Magnetventil enthält, das diesen Durchflusssensor mit Wasser versorgt und um es der logischen Verarbeitungseinheit zu ermöglichen, dieses Magnetventil in einer A genannten Variablen zu registrieren;

• eine Reihe von Schritten (11-4), mit denen die verbundenen Geräte definiert werden, die direkt von diesem Durchflusssensor mit Wasser versorgt werden und um es der logischen Verarbeitungseinheit zu ermöglichen, den folgenden Algorithmus auszuführen:

∘ wenn das verbundene Gerät ein Magnetventil enthält, wird dieses in einer ersten, der sogenannten ov-Liste registriert;
∘ wenn das verbundene Gerät einen Durchflusssensor enthält, wird dieser in einer zweiten, der sogenannten od-Liste registriert;
∘ wenn das verbundene Gerät einen Feuchtigkeitssensor enthält, wird dieser in einer dritten, der sogenannten oh- Liste registriert;

• eine Reihe von Schritten (11-5), mit denen die logische Verarbeitungseinheit die Schablone (10) ausarbeiten kann, mit der die Betriebsgrenzen für die Wasseranschlussstellen, die über kein spezielles verbundenen Gerätes, das einen Durchflusssensor enthält, verfügen und deren Wasserversorgung direkt von diesem Durchflusssensor gesteuert wird, festgelegt werden.

14. Verfahren nach dem vorangehenden Anspruch, wobei dieses Verfahren eine Überwachungsphase umfasst, und **dadurch gekennzeichnet ist, dass** die Überwachungsphase umfasst:

• einen Schritt (12-1) in dem die Logikeinheit des mindestens einen verbundenen Gerätes reagieren kann, wenn eines der verbundenen Geräte, dessen Magnetventil in der ov-Liste registriert ist, ein Signal gesendet hat, dass dieses Magnetventil sich nicht schließt, oder wenn eines der in der sogenannten oh-Liste registrierten verbundenen Geräte ein Signal, dass es Feuchtigkeit entdeckte, wobei diese Reaktion darin besteht, das Magnetventil A (12-9) zu schließen und eine Schliesswarnung an das Systemnetzwerk (12-10) zu schicken;
• einen Schritt (12-2) zur Messung des vom Durchflusssensor gelieferten Wertes D;
• einen Schritt (12-3) in dem überprüft werden kann, ob D > 0 l/min, wobei D den in Schritt (12-2) gemessenen Durchfluss bezeichnet und wenn dies nicht der Fall ist, Rückkehr zu Schritt (12-1);
• einen Schritt (12-4) in dem überprüft werden kann, ob das Magnetventil A nicht geschlossen ist, was bedeutet, dass es eine Fehlfunktion hat und direkt Übergang zu Schritt (12-12) um eine Warnung Schließfehler zu senden um das zu versorgende verbundene Gerät zu warnen und Rückkehr zu Schritt (12-1).
• eine Reihe abgeschlossener Schritte (12-5), mit denen Dj=D-∑Di, berechnet werden kann, wobei Dj die restliche Durchflussmenge bezeichnet, D die in (12-2) gemessene Durchflussmenge und ∑Di die Summe der von den in der od-Liste registrierten Durchflusssensoren gemessenen Durchflussmengen;
• einen Schritt (12-6) in dem überprüft werden kann, ob die restliche Durchflussmenge Dj höher 0 ist und wenn dies nicht der Fall ist, Rückkehr zu Schritt (12-1);
• einen Schritt (12-7) unter Verwendung der während der Konfiguration ausgearbeiteten Schablone um zu bestimmen, ob die restliche Durchflussmenge Dj sich nicht im normalen Betriebsbereich befindet und damit ob ein Warnverfahren (12-8) aufgerufen werden muss, mit der restlichen Durchflussmenge Dj als Parameter und in allen Fällen Rückkehr zu Schritt (12-1).

15. Verfahren nach einem der beiden vorangehenden Ansprüche, wobei dieses Verfahren eine Warnphase der Durchflussmesser des Systems umfasst und **dadurch gekennzeichnet, dass** die Warnphase umfasst:

• einen Schritt (13-1) unter Verwendung der während der Konfiguration ausgearbeiteten Schablone um zu Schritt (13-8) zu gehen, wenn die restliche Durchflussmenge sich im Warnbereich Unterbrechung befindet oder wenn dies nicht der Fall ist, zu Schritt (13-2) zu gehen;
• die Schritte (13-8, 13-9), die es ermöglichen das Magnetventil A zu schließen und eine Unterbrechungswarnung an das Systemnetzwerk zu schicken, bevor das Verfahren beendet wird;
• einen Schritt (13-2), in dem überprüft wird, dass keinerlei Benutzeranweisung ansteht und wenn dies nicht der Fall ist, Verfahren beenden;
• einen Schritt (13-3) um zu überprüfen, dass keinerlei Warnung bereits seit weniger als X Sekunden übermittelt wurde, wobei X eine vernünftige Zeit darstellt, damit der Benutzer reagieren kann und, wenn dies nicht der Fall ist, Verfahren beenden;
• einen Schritt (13-4) um zu überprüfen, ob bereits drei Warnungen übermittelt wurden, um zu Schritt (13-5) zu gehen, wenn es der Fall ist oder wenn dies nicht der Fall ist, zu Schritt (13-7) zu gehen;
• die Schritte (13-5, 13-6), die es dem verbundenen Gerät ermöglichen, das Wasser abzustellen und eine Schließwarnung an das Systemnetzwerk zu schicken, bevor das Verfahren beendet wird;
• einen Schritt (13-7), die es ermöglichen eine Leckwarnung an das Systemnetzwerk zu schicken, bevor das Verfahren beendet wird.

**Claims**

1. A scalable home automation system comprising a plurality of connected devices and a system network, the said scalable home automation system being intended for the monitoring, management and control of a sanitary facility and elements constituting said sanitary facility by means of the said plurality of connected devices communicating together through a system network, the said system network physically comprising one or more sub-networks each of one of the following types

- • wireless;
- • wired;
- • mobile;

and in which each of the plurality of connected devices includes hardware and software means for transmitting and receiving data over the Internet network through the system network,

- each of the plurality of connected devices comprising an electronic interface (1-A, 1-B, 1-C or 1-D) comprising

  • a logic processing unit (1-A4, 1-B4, 1-C4 or 1-D4) executing software to perform its function(s);
  • hardware and software means configured to transmit and receive data via the system network with all other connected devices;
  • hardware and software means configured to transmit and receive data via the system network with remote terminals connected to the Internet;
  • hardware and software means configured to perform their function(s) using data communicated by other connected devices of the plurality of connected devices;
  • hardware and software configured to perform their function(s) using data or commands supplied by remote terminals connected to the Internet;
  • hardware and software means configured to transmit alert or information messages to remote terminals.

- each of the plurality of connected devices being taken from an actuator sensor (2-C, 9-4) and/or a single-break sanitary sewer (3D) and/or a multi-break sanitary sewer (3-C) and/or a single-break modular sanitary sewer (4-F) and/or a multi-break modular sanitary sewer (4-C, 9-12) and/or a tap (5A, 5B, 5C, 5D, 9-16) and/or a drain plug (6-B, 6-C, 9-17) and/or a float valve (7A, 9-18) and/or sanitary equipment (8B-0, 9-13) and/or a humidity sensor (8A, 8B-2, 9-14), each of the plurality of connected devices integrating an interface (1-A, 1-B, 1-C or 1-D) configured to :

  ◦ transmit on the system network information about its operating status and its use of water;
  ◦ modify its operation according to the information it receives from the other connected devices;
  ◦ be controllable by means of remote terminals.

**2.** A system according to the previous claim in which the electronic interface (1-A, 1-B, 1-C or 1-D) of at least one connected device of the plurality of connected devices includes hardware and software means for acting as a repeater function in order to extend the signal range on the transmission medium of the system network to ensure the interconnection of all connected devices.

**3.** A system according to one of the previous claims in which the electronic interface (1-A, 1-B, 1-C or 1-D) of at least one connected device of the plurality of connected devices includes hardware and software means for acting as the gateway function to interconnect two subnets each using a different protocol.

**4.** A system according to claim 1, comprising a sensor-actuator, comprising:

  • a water inlet coupling (2A-2, 2B-2 or 2C-2) at one end and a water outlet coupling (2A-3, 2B-3 or 2C-3) at the other end allowing the connection of the said connected sensor-actuator device to a pipe of the sanitary facility;
  • an electric valve (2A-4 or 2B-4) which, using an electric signal, to control the flow rate of the water through the pipe to which the said connected sensor-actuator device is mounted;
  • a flow sensor (2A-5 or 2B-5) providing an electrical signal, the said electrical signal having at least one variable characteristic according to the flow rate through the pipe to which the said sensor-actuator device is mounted,

the said sensor-actuator device being preferably a pressure sensor (2B-6) providing another electrical signal at least one of whose characteristics varies according to the water pressure at the water inlet of the said sensor-actuator device.

**5.** The system according to claim 1, comprising a single-break sanitary sewer which includes a plurality of circuit outlets and a single valve, the said single-break sanitary sewer comprising:

  • a water inlet coupling (3B-2 or 3D-2) at each of the two ends of the said single-break sanitary sewer to connect the primary pipe and/or another sanitary sewer;

• a connection for each water outlet (3B-3 or 3D-3) on the side of the said single-break sanitary sewer allowing connection to secondary pipes and so that the said single-break sanitary sewer can be installed instead of a conventional sanitary sewer;
• an electric valve (3B-4) which, using an electric signal, controls the flow rate of the water flowing to all the water outlets of the said single-break sanitary sewer connected device;
• a flow sensor (3B-5) for each water outlet providing an electrical signal, at least one of whose characteristics varies according to the flow rate flowing to the water outlet to which the sensor is connected.

6. A system according to claim 5, comprising a multi-break sanitary sewer which includes a plurality of circuit outlets and a plurality of valves at the water outlet, the said multi-break sanitary sewer comprising:

   • a water inlet coupling (3A-2 or 3C-2) at each of the two ends of the said multi-break sanitary sewer to connect the primary pipe and/or another sanitary sewer;
   • a connection for each water outlet (3A-3 or 3C-3) on the side of the said single-break sanitary sewer to connect the secondary pipes and allowing the installation of the said single-break sanitary sewer
   • an electric valve (3A-4) for each water outlet which, using an electric signal, controls the flow rate of the water flowing to the water outlet to which the electric valve is connected;
   • a flow sensor (3A-5) for each water outlet providing an electric signal, at least one of whose characteristics varies according to the flow rate flowing to the water outlet to which the sensor is connected.

7. A system according to claim 5, in which the single-break modular sanitary sewer comprises:

   • a connected device configured at the base of the single-break sanitary sewer known as the single-break base module (4F-0a) comprising :

      ○ a water inlet coupling (4D-2 or 4F-2a) for connecting the primary pipe;
      ○ a primary water flow connection (4D-6 or 4F-6) connecting a connected device known as the additional single-break module;
      ○ an electrical connector (4D-7 or 4F-7) for connecting the additional single-break module to the wired system network provided by the said single-break base module, using the gateway function if necessary;
      ○ a secondary water flow connection (4D-3 or 4F-3) for connecting a secondary pipe;
      ○ an electric valve (4D-4) which, using an electric signal, controls the flow rate of the water flowing to the primary water outlet (4D-6 or 4F-6) and to the secondary water outlet (4D-3 or 4F-3);
      ○ a flow sensor (4D-5) generating an electric signal, at least one of whose characteristics varies according to the flow rate flowing to the secondary water outlet (4D-3 or 4F-3);

   • a plurality of connected devices configured at the base of the single-break sanitary sewer and known as additional single-break modules (4F-0b) and which are configured to each form a sanitary sewer connecting the said single-break modular sanitary sewer instead of a conventional sanitary sewer and wherein each of the said single-break additional modules comprises :

      ○ a water inlet coupling (4E-2 or 4F-2b) for connecting the said additional single-break module to the single-break base module or to another additional single-break module;
      ○ an electrical connector (4E-8 or 4F-8) for connecting the said additional single-break module to the wired system provided by the single-break base module or transmitted by another additional single-break module;
      ○ a primary water outlet coupling (4E-6 or 4F-6) connecting another additional single-break module;
      ○ an electrical connector (4E-7 or 4F-7) connecting another additional single-break module to the system network provided by the single-break base module and transmitted by the said additional single-break module;
      ○ a secondary water outlet coupling (4E-3 or 4F-3) connecting a secondary pipe;
      ○ a flow sensor (4E-5) providing an electric signal at least one of whose characteristics varies according to the flow rate flowing to the secondary water outlet (4E-3 or 4F-3).

8. A system according to claim 6, comprising a multi-break modular sanitary sewer which comprises:

   • a connected device configured on the base of the multi-break sanitary sewer device and known as the multi-break base module (4C-0a) and comprising:

      ○ a water inlet coupling (4A-2 or 4C-2a) for connecting the primary pipe;
      ○ a primary water flow outlet (4A-6 or 4C-6) connecting an additional multi-break module;

◦ an electrical connector (4A-7 or 4C-7) connecting an additional multi-break module to the wired system network provided by the said multi-break base module using the gateway function if necessary;

◦ a secondary water outlet coupling (4A-3 or 4C-3) connecting a secondary pipe;

◦ an electrical valve (4A-4) which , using an electric signal, controls the flow rate of the water flowing towards the secondary water outlet (4A-3 or 4C-3);

◦ a flow sensor (4A-5) generating an electric signal, at least one of whose characteristics varies according to the flow rate flowing to the secondary water outlet (4A-3 or 4C-3);

• a plurality of connected devices configured on the base of the multi-break sanitary sewer and known as additional multi-break modules (4C-0b) are configured to form a sanitary sewer connecting the said multi-break modular sanitary sewer instead of a conventional sanitary sewer and wherein each of the plurality of the additional multi-break modules comprises :

◦ a water inlet coupling (4B-2 or 4C-2b) for connecting the said multi-break additional module to the multi-break base module or to another additional multi-break module;

◦ an electrical connector (4B-8 or 4C-8) for connecting the said additional multi-break module to the wired system provided by the multi-break base module or transmitted by another additional multi-break module;

◦ a primary water flow coupling (4B-6 or 4C-6) connecting another additional multi-break module;

◦ an electrical connector (4B-7 or 4C-7) for connecting another additional multi-break module to the system network provided by the multi-break base module and transmitted by the said additional multi-break module;

◦ a secondary water outlet coupling (4B-3 or 4C-3) connecting a secondary pipe;

◦ an electrical valve (4B-4) which, using an electric signal, controls the flow rate of water flowing towards the secondary water outlet (4B-3 or 4C-3);

◦ a flow sensor (4B-5) providing an electric signal at least one of whose characteristics varies according to the flow rate flowing to the secondary water outlet (4B-3 or 4C-3).

9. The system according to claim 1 comprising a tap, the said tap and taken from among the single tap, single-control mixer tap or dual-control mixer tap, the said tap comprising: a water inlet coupling for the single tap or two water inlet couplings (5A-2) for the single-control mixer tap or dual-control mixer taps; and wherein for each of the said tap water inlet, a flow meter (5C-5, 5D-5) on the flow rate supplies an electric signal at least one of whose characteristics varies according to the flow rate flowing in the water inlet (5C-2, 5D-2) to which the sensor is connected.

10. A system according to the previous claim comprising a sensor (5A-3) when the connected device is a single tap and/or a single-control mixer tap or two sensors when the connected device is a dual-control mixer tap, each of these sensors providing an electrical signal at least one of whose characteristics varies according to the position of the tap mechanism to detect the opening of the said tap, and in which an electric valve (5B-4 or 5D-4) is configured to use the electric signal to modify the flow rate in the said at least one single tap single-control, mixer tap or dual-control mixer tap.

11. The system according to claim 1, comprising a float valve which comprises:

• A water inlet coupling (7A-2) allowing the connection of the said float valve to a pipe of the sanitary facility;
• a water outlet (7A-3) allowing the tank to be filled;
• a float (7A-6) rigidly connected with a position sensor (7A-5) for measuring the water level in a tank;
• an electric valve (7A-4) which, using an electric signal, controls the flow rate of the water towards the water outlet (7A-3).

12. A system according to claim 1, comprising a drain plug which comprises:

• either electric valve (6C-4) with a position sensor (6C-5) which, using an electric signal, controls the flow of water from the water inlet (6C-2) to the outlet (6C-3) and thus controls the outflow of water into the drain;
• or a mechanism (6A or 6B-2) comprising

◦ a device (6A-2e) which, using an electric signal, changes the position of the operating rods (6A-3 or 6B-3) to raise or lower the drain plug (6B-4) and thus to control the outflow of water into the drain;
◦ a position sensor (6A-2c) to control the correct opening and closing of the drain plug (6B-4).

13. A method, comprising a configuration phase of the system flow sensors according to one of claims 4 to 9, the said method being **characterized in that** the configuration phase comprises

• a step (11-1) for creating a reference flow operating template having as a characteristic D = 0 l/min ∀ t, D designating the flow and t designating the time

• a step (11-2) for detecting the number and type of other connected devices of the plurality of connected devices in the system network;

• a step (11-3) for defining the connected device integrating an electrical valve supplying water to the said flow sensor and allowing a processing logic unit to record this electric valve in a variable known as A;

• a series of steps (11-4) to define the devices connected directly to the water supply by means of the said flow sensor and to allow the logic processing unit to execute the following algorithm

∘ if the connected device integrates an electric valve, the latter is registered on a first list known as ov;

∘ if the connected device integrates a flow sensor, the latter is registered on a second list known as od;

∘ if the connected device integrates a humidity sensor, it is registered on a third list known as oh;

• a series of steps (11-5) allowing the logic treatment unit to elaborate the template (10) setting the operating limits for water points that do not have a dedicated connected device integrating a flow sensor whose water supply is directly controlled by the said flow sensor.

14. A method according to the previous claim, the said method comprising a monitoring phase and being **characterized in that** the monitoring phase comprises :

• a step (12-1) allowing the logic unit of the at least one connected device to react if one of the connected objects whose electrical valve is registered in the ov list has sent a signal indicating that this electrical valve does not close or if one of the connected objects registered in the said oh list has sent a signal indicating that it has detected humidity the said reaction consisting in closing the electrical valve A (12-9) and sending a closing alert to the system network (12-10);

• a step (12-2) for measuring the value D provided by the flow sensor;

• a step (12-3) for checking D > 0 l/min, where D designates the flow measured in step (12-2) and returning to step (12-1) otherwise;

• a step (12-4) to check that the electrical valve A is not closed, which means that it is in default and goes directly to step (12-12) to send a failure to close alert in order to warn the connected powering it device and returns to step (12-1);

• a series of looped steps (12-5) to calculate Dj=D-∑Di, Dj designating the flow residue, D designating the measured flow rate as (12-2) and ∑Di designating the sum of the flow rates measured by the flow sensors recorded in the od list;

• a step (12-6) to check that the flow residue! Dj is greater than 0 and returning in the opposite case to step (12-1);

• a step (12-7) using the template developed during configuration to determine if the residual flow Dj is not in the normal operating area and therefore if an alert procedure (12-8) should be initiated on the basis of the residual flow Dj and in any case returning to step (12-1).

15. A method according to one of the two previous claims, the said method comprising an alert phase of the flow sensors of the system and being **characterized in that** the alert phase comprises:

• a step (13-1) using the template developed during configuration to move to step (138) if the residual flow is in the break alert area or to move to step (13-2) if not;

• steps (13-8, 13-9) to close the electric valve A and transmit a failure alert on the system network before terminating the method;

• a step (13-2) verifying that no user instructions are in progress and terminating the method if not;

• a step (13-3) verifying that no alert has already been transmitted for less than X seconds, X representing a reasonable time for the user to have time to react and terminating the method if not;

• a step (13-4) checking if three alerts have already been transmitted to proceed to step (13-5) if this is the case or to step (13-7) if not;

• steps (13-5, 13-6) allowing the connected device to turn off the water at the outlet and transmit a shutdown alert on the system network before terminating the method;

• a step (13-7) to transmit a leak alert on the system network before terminating the procedure.

**Figure 1A**

**Figure 1B**

**Figure 1C**

**Figure 1D**

**Figure 2A**

**Figure 2B**

**Figure 2C**

Figure 3A

Figure 3B

3C-0

3C-2

3C-3

3C-3

3C-3

3C-3

3C-2

**Figure 3C**

3D-0

3D-2

3D-3

3D-3

3D-3

3D-3

3D-2

**Figure 3D**

Figure 4A

Figure 4B

Figure 4C

4D-7    4D-6

4D-5

4D-1

4D-3

4D-2    4D-4

**Figure 4D**

4E-7    4E-6

4E-5

4E-1

4E-3

4E-8    4E-2

**Figure 4E**

4F-7    4F-6

4F-0b

4F-3

4F-8    4F-2b

4F-7    4F-6

4F-0a

4F-3

4F-2a

4F-0b

4F-3

4F-0b

4F-3

4F-0b

4F-3

4F-0a

4F-3

4F-2a    4F-3

**Figure 4F**

27

5A-3

5A-0

5A-2          5A-1          5A-2

**Figure 5A**

5B-4

5B-3

5B-0

5B-2          5B-1          5B-2

**Figure 5B**

**Figure 5C**

**Figure 5D**

6A-2a

6A-3

6A-2c

6A-2b

6A-2e  6A-2d  6A-2f

**Figure 6A**

6B-4

6B-0

6B-2

6B-3

6B-1

**Figure 6B**

6C-2

6C-1

6C-5

6C-0

6C-3

6C-4

**Figure 6C**

**Figure 7A**

8A-0

8A-1          8A-2

Figure 8A

8B-0

8B-1

8B-2

Figure 8B

**Figure 9**

Figure 10

```
                    ┌─────────────────────┐
                    │  Configuration d'un │
                    │  capteur de débit   │
                    └─────────────────────┘
                              │
  11-1 ╲        ┌──────────────────────────┐
       ╲        │      Créer le gabarit     │
                │       0 l/min ∀ t         │
                └──────────────────────────┘
                              │
  11-2 ╲        ┌──────────────────────────┐
       ╲        │   Détecter tous les autres │
                │   dispositifs connectés.   │
                └──────────────────────────┘
                              │
  11-3 ╲  ┌──────────────────────────────────────┐
       ╲  │ Sélectionnez le dispositif connecté i │
          │ intégrant une vanne électrique et      │
          │ alimentant ce capteur de débit :       │
          │ Enregistrer la vanne électrique de     │
          │ i → A                                  │
          └──────────────────────────────────────┘
```

Enregistrer le dispositif connecté : i → oh[].

Oui

Le dispositif connecté i intègre un capteur d'humidité?    Non

Enregistrer le dispositif connecté : i → od[].

Oui

Le dispositif connecté i intègre un capteur de débit ?    Non

11-4

Sélectionnez un dispositif connecté i directement alimenté en eau par ce capteur de débit ou FIN pour finir.

Non

Enregistrer le dispositif connecté : i → ov[].

Oui

FIN ?    Le dispositif connecté i intègre une vanne électrique?    Non

Oui

11-5

Sélectionnez un type de point d'eau directement alimenté en eau par ce départ d'eau ou FIN pour finir.

Mise à jour du gabarit avec le type et le nombre de points d'eau

FIN ?    Non    Entrez le nombre de points d'eau de ce type.

Oui

Retour

# Figure 11

**Surveillance d'un capteur de débit**

12-1

Signal de défaut de fermeture sur un dispositif connecté enregistré dans ov ?

Oui

Non

Signal de détection d'humidité d'un dispositif connecté enregistré dans oh ?

Oui

Non

12-9

Fermer l'Actionneur A

12-3

Débit du capteur → **D**
Enregistrer **D**

12-2

Envoyer le signal de fermeture sur le réseau système.

**D > 0 ?**

Non

Oui

12-10

Actionneur A fermé ?

12-4

12-12

Envoyer le signal de défaut de fermeture sur le réseau système.

i = 1 ;
Dj = **D**

i = i + 1

12-5

Dj = Dj - (débit de l'dispositif connecté od[i]).

12-7

Dk = Dj - (gabarit en t)

i > nombre de dispositifs connectés enregistrés dans od ?

Non

Dk > 0 ?

Non

Oui

Oui

Dj > 0 ?

Oui

12-6

Non

Alerte fuite (Dj)

12-8

t = 0

# Figure 12

Alerte fuite (Dj)

13-1

Dj > (débit de rupture) ?

Oui

Non

13-2

Programme
en cours sur l'un des
points d'eau ?

Oui

Non

13-8

Fermer l'Actionneur A

13-3

Alerte envoyée
depuis X secondes ?

Non

Oui

13-9

Envoyer le signal d'alerte rupture
sur le réseau.

13-4

3 alertes
envoyées ?

Oui

Non

13-5

13-6

Fermer l'Actionneur A

Envoyer le signal de fermeture sur
le réseau.

13-7

Envoyer le signal d'alerte fuite sur
le réseau système.

Retour

**Figure 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870325

- FR 3007925